(19) Europäisches Patentamt
European Patent Office
Office européen des brevets

(11) EP 1 434 780 B1

(12) EUROPÄISCHE PATENTSCHRIFT

(45) Veröffentlichungstag und Bekanntmachung des Hinweises auf die Patenterteilung:
**14.03.2007 Patentblatt 2007/11**

(21) Anmeldenummer: **02790284.0**

(22) Anmeldetag: **11.09.2002**

(51) Int Cl.:
*C07F 5/06* (2006.01)

(86) Internationale Anmeldenummer:
**PCT/EP2002/010171**

(87) Internationale Veröffentlichungsnummer:
**WO 2003/031454 (17.04.2003 Gazette 2003/16)**

(54) **KATALYSATORSYSTEME FÜR DIE ZIEGLER-NATTA-PROPEN-POLYMERISATION**

CATALYST SYSTEMS FOR ZIEGLER-NATTA PROPENE POLYMERISATION

SYSTEMES CATALYSEURS POUR LA POLYMERISATION ZIEGLER-NATTA DU PROPENE

(84) Benannte Vertragsstaaten:
**AT BE BG CH CY CZ DE DK EE ES FI FR GB GR IE IT LI LU MC NL PT SE SK TR**

(30) Priorität: **09.10.2001 DE 10149785**

(43) Veröffentlichungstag der Anmeldung:
**07.07.2004 Patentblatt 2004/28**

(73) Patentinhaber: **Merck Patent GmbH**
**64293 Darmstadt (DE)**

(72) Erfinder:
- **KÖHLER, Katrin**
  **37073 Goettingen (DE)**
- **SCHUMANN, Herbert**
  **12307 Berlin (DE)**
- **WASSERMANN, Birgit, Corinna**
  **13158 Berlin (DE)**
- **WASSERMANN, Wilfried**
  **13158 Berlin (DE)**
- **LANGE, Katharina**
  **10555 Berlin (DE)**
- **DECHERT, Sebastian**
  **10115 Berlin (DE)**
- **HUMMERT, Markus**
  **10557 Berlin (DE)**
- **SCHUTTE, Stefan**
  **10823 Berlin (DE)**
- **KAMINSKY, Walter**
  **25421 Pinneberg (DE)**
- **EISENHARDT, Andrea**
  **22529 Hamburg (DE)**
- **HEUER, Björn**
  **22303 Hamburg (DE)**
- **LABAN, Andre**
  **85049 Ingolstadt (DE)**

(56) Entgegenhaltungen:
**EP-A- 0 919 557** **EP-A- 1 132 409**
**DE-A- 4 306 569**

- **PATENT ABSTRACTS OF JAPAN vol. 011, no. 369 (C-461), 2. Dezember 1987 (1987-12-02) & JP 62 138506 A (TOKUYAMA SODA CO LTD), 22. Juni 1987 (1987-06-22)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft die Verwendung von Stickstoff-haltigen Aluminiumorganyl-Komplexen der allgemeinen Formel (I)

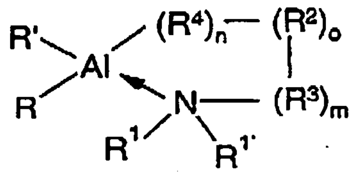 (I)

mit der Maßgabe, dass

$R^1$, $R^{1'}$ $CH_3$
mit
R, R' unabhängig voneinander verzweigtes oder unverzweigtes $C_3$-$C_7$-Alkyl
oder
$R^1$, $R^{1'}$ $C_2H_5$

mit

R, R' unabhängig voneinander verzweigtes oder unverzweigtes $C_1$-$C_7$-Alkyl,

wenn

$R^2$

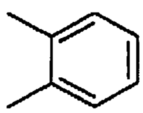

$R^3$ $CH_2$
m, o 1

und

n 0

bedeuten,
oder mit der Maßgabe, dass

R, R', $R^1$, $R^{1'}$ unabhängig voneinander verzweigtes oder unverzweigtes $C_1$-$C_7$-Alkyl,

wenn

$R^2$

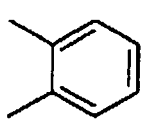

$R^4$ $CH_2$
n, o 1,

und

m 0

bedeuten,
oder mit der Maßgabe, dass

$R^1$, $R^{1'}$ $CH_3$
mit
R, R' unabhängig voneinander verzweigtes oder unverzweigtes $C_3$-$C_7$-Alkyl

oder

$R^1$, $R^{1'}$ $C_2H_5$

mit

R, R' unabhängig voneinander verzweigtes oder unverzweigtes $C_1$-$C_7$-Alkyl,

wenn

$R^2$

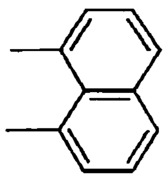

o 1,

und

m, n 0

bedeuten, als Cokatalysatoren in heterogenen Polymerisationsreaktionen zur Polymerisation von Propen. Diese Systeme weisen dabei verbesserte Eigenschaften bezüglich Aktivität und Stereoselektivität im Vergleich zu herkömmlich eingesetzten Cokatalysatoren wie $AlEt_3$ auf und können gleichzeitig als Cokatalysatoren aber auch als Stereoselektivitätsvermittler wirken.

Die Ziegler-Natta-katalysierte Polymerisation ist ein Polymerisationsverfahren, das seit den initiierenden Arbeiten von Ziegler und Natta in den 50er Jahren über mehrere Generationen hinweg verbessert wird. Dabei sind sowohl die Steigerung der Aktivität als auch der Stereoselektiviät die treibenden Kriterien für die kontinuierliche Entwicklung des Katalysatorsystems. Die Katalysatorsysteme zur Polymerisation von 1-Alkenen werden mittlerweile in fünf Generationen unterteilt [E. Albizatti, U. Giannini, G. Collina, L. Noristi, L. Resconi, *Polypropylene Handbook,* E. P. Moore (Ed.), Hanser Publishers, München, **1996**, 11].

| Generation | Zusammensetzung | Produktivität[a] [$kg_{PP}/g_{Katalysator}$] | Isotaxie Index | Morphologie-kontrolle |
|---|---|---|---|---|
| 1. | δ-$TiCl_3 0.33AlCl_3$ + $AlEt_2Cl$ | 0.8 - 1.2 | 90 - 94 | nicht möglich |
| 2. | δ-$TiCl_3$ + $AlEt_2Cl$ | 3 - 5 (10 - 15) | 94 - 97 | möglich |
| 3. | $TiCl_4$/Ester/$MgCl_2$ + $AlR_3$/ Ester | 5 - 10 (15 - 30) | 90 - 95 | möglich |
| 4. | $TiCl_4$/Diester/$MgCl_2$ + $AlEt_3$/Silane | 10 - 25 (30 - 60) | 95 - 99 | möglich |

(fortgesetzt)

| Generation | Zusammensetzung | Produktivität[a] [$kg_{PP}/g_{Katalysator}$] | Isotaxie Index | Morphologie-kontrolle |
|---|---|---|---|---|
| 5. | $TiCl_4$/Diether/$MgCl_2$ + $AlEt_3$ | 25-35 (70-120) | 95 - 99 | möglich |
| [a] Polymerisation: Hexan-Slurry, 70°C, 7 bar Propen, 4 h, $H_2$ zur Molmassenkontrolle (Werte in Klammern entstammen von Polymerisationen in Masse, 2 h, 70°C, $H_2$). | | | | |

Die heutigen etablierten System basieren auf der Verwendung von Mehrkomponentenkatalysatoren. Neben dem Trägermaterial gehört dazu als eigentlicher Katalysator eine Übergangsmetall-Verbindung, z. B. eine Titan-Verbindung, die erst durch Zugabe eines Aluminium-haltigen Cokatalysators aktiviert wird. Darüber hinaus werden notwendigerweise weitere Bestandteile wie interne und externe Donoren benötigt. Dabei verhindert der Einsatz eines internen Donors die Agglomeration der katalytisch aktiven Spezies, während der externe Donor die Stereospezifität bei der Verwendung prochiraler Olefine verbessert. Wie der Tabelle zu entnehmen ist, fand in den letzten Jahrzehnten ein kontinuierlicher Verbesserungsprozeß statt, bei dem bis zur fünften Generation vor allem die Oberflächen der geträgerten Katalysatoren vergrößert wurden und der Anteil aspezifisch arbeitender Zentren verringert wurde [P. Pino, R. Mülhaupt, *Angew. Chem.* **1980,** *92 (11)*, 869; M. Boreo, M. Parrinello, S. Hüffer, H. Weiss, *J. Am. Chem.* Soc. **2000**, *122*, 501]. Diese Katalysatorensysteme ersparen die kostenintensive Abtrennung von Katalysatorrückständen und die aufwendige Extraktion von ataktischen Anteilen aus den hergestellten Polyolefinen. Das mittlerweile erarbeitete Verständnis über den Zusammenhang zwischen Katalysator- und Polymermorphologie ermöglicht die Kontrolle der Polymermorphologie während des Polymerisationsprozesses, was zusätzliche verarbeitungstechnische Schritte wie Extrusion und Granulierung eliminiert. Die Fortschritte haben die lösemittelfreie Gasphasenpolymerisation und die Polymerisation in Masse erst möglich gemacht und zu wesentlichen Vereinfachungen bei der Suspensionspolymerisation geführt. [P. Galli, J. C. Haylock, *Makromol. Chem., Macromol. Symp.* **1992**, *63*, 19-54; P. Corradini, V. Buscio, G. Guerra, in *Comprehensive Polymer Science,* Vol. 4, G. Allen (Ed.), Pergamon Press, **1989,** S. 29; C. Jenny, P. Maddox, *Solid State & Mat. Science* **1998,** 3, 94; K. Soga, T. Shiono, *Progress in Polymer Science* **1997,** *22*, 1503]

Die wichtigsten bevorzugt verwendeten Cokatalysatoren sind Aluminiumalkyle wie $AlEt_3$, Al-i-$Bu_3$, $AlEt_2Cl$, $AlEtCl_2$ und $AlEt_2OR$, allesamt sehr luftsauerstoff- und feuchtigkeitsempfindlich und daher schwer zu handhaben. Als Katalysatoren sind neben den Titanchloriden besonders Verbindungen des Vanadiums und Chrom von Interesse, in speziellen Anwendungen auch Molybdän, Kobalt, Rhodium und Nickel. An Stelle der Aluminiumalkyle sind zahlreiche andere metallorganische Verbindungen besonders Natrium, Lithium und Cadmium in Kombination mit Titanverbindungen als wirksam beschrieben. (H.J. Sinn et al., Polymerisation und Insertionsaktivität von Aluminiumtrialkylen und Ziegler-Natta Katalysatoren, Angew. Chem. 72 (1960) 522)

Zur Beurteilung der Leistungsfähigkeit eines Koordinations-Katalysatorsystems zur Herstellung von Polymeren sind neben der Verwirklichung der gewünschten Produkteigenschaften weitere Faktoren entscheidend, wie die Aktivität des Katalysatorsystems, also die für eine wirtschaftliche Umsetzung einer vorgegebenen Menge Olefin erforderliche Menge an Katalysator, der Produktumsatz pro Zeiteinheit und die Produktausbeute, der Verlust an Katalysator sowie die Wiederverwendbarkeit des Katalysators. Es werden daher Katalysatorsysteme mit einer möglichst hohen Produktivität aber auch mit hoher Spezifität zugunsten eines geringen Verzweigungsgrades und einer hohen Stereoregularität des Polymers gesucht.

Wesentlich ist aber auch die Frage der Stabilität und der Handhabbarkeit des Katalysators bzw. seiner Komponenten. Durch Zutritt von (Luft-)Sauerstoff und/oder Wasser werden die herkömmlichen Katalysatoren in ihrer Aktivität vermindert oder irreversibel zerstört. Die Katalysatoren müssen daher bei Herstellung, Lagerung und Einsatz strikt vor Luft- und Feuchtigkeitszutritt bewahrt werden, was naturgemäß die Handhabung erschwert und den erforderlichen Aufwand erhöht.

Übliche Katalysatorsysteme sind auch empfindlich gegenüber Stoffen, die elektronenreiche Elemente, wie etwa Sauerstoff oder Stickstoff im Molekül enthalten. Verbindungen wie Ether und Amine oder auch polare Monomere, die als Comonomere oder Additive für das Polymer von Interesse sein können, deaktivieren den Katalysator.

Noch empfindlicher in dieser Hinsicht und daher noch schwieriger handhabbar sind die als Aktivatoren bzw. Cokatalysatoren einzusetzenden metallorganischen Verbindungen, wie insbesondere die überwiegend hierfür verwendeten Aluminiumalkylverbindungen. Gerade diese stellen aufgrund ihrer extremen Empfindlichkeit und Selbstentzündlichkeit in der Praxis ein ernstes Problem dar.

In DE19753135 wurde eine Reihe von Aluminium-Verbindungen beschrieben, die sich durch eine intramolekulare Donor-Seitenkette auszeichnen, z.B. einer Amino-, Thio- oder Oxo-koordinierten Seitenkette, die sich nach dem Fachmann bekannten Methoden zur Darstellung metallorganischer Verbindungen herstellen lassen. Aus DE 43 06 569

A1 sind zyklische, metallorganische Verbindungen, wie z. B. 1-Aluminium-1(3-dimethalaminopropyl)-cyclohexan, bekannt, die als Komponenten in Koordinations-Katalysatorsystemen eingesetzt werden und in Verfahren zur Herstellung von Polymeren aus ungesättigten Kohlenwasserstoffen durch katalysierte Metathesereaktion verwendet werden können. Die beschriebenen Aluminium-Verbindungen wirken als cokatalytisch aktivierende Komponenten in Ziegler-Natta-Katalysatoren zur Polymerisation von Ethylen. Die Polymerisation von Propylen oder höheren $\alpha$-Olefinen gelingt jedoch mit den in dieser Patentanmeldung beschriebenen Katalysatorsystemen nicht. Gleiches gilt auch für die in JP 62-138506 [(Tokuyama Soda Co Ltd.), 22. Juni 1987 (Patent Abstracts of Japan Bd. 011, Nr. 369 (C461), 2. Dezember 1987 (1987-12-02)] erwähnten Verbindungen, wie beispielsweise [3-(Diethylamino)propyl-C,N(2-methylpropyl)-Aluminium. Nachfolgend wurde in DE10010796 beschrieben, dass die in DE19753135 beschriebenen Verbindungen durch Trägerung auf $MgCl_2$ unter Zugabe von $TiCl_4$ bzw. unter Verwendung von $MgCl_2/TiCl_4$ zur Polymerisation von Propylen verwendet werden können. Jedoch erreichen die darin verwendeten Katalysatorsysteme nicht die mittels herkömmlicher Ziegler-Natta-Katalysatorsysteme ($MgCl_2/TiCl_4/AlEt_3$) erhaltenen Produktivitäten bzw. Aktivitäten.

Es galt folgende Faktoren zu verbessern:

a) Um die Ausbeute an Polymeren in der Propenpolymerisation weiter steigern zu können, müssen Katalysatorsysteme mit höheren Aktivitäten maßgeschneidert und entwickelt werden. Die Aktivitätssteigerung sollte sich über eine Optimierung des Cokatalysators erreichen lassen, da er den Katalysator in die eigentlich katalytisch aktive Spezies überführt und immer wieder reaktiviert. Dieses Wechselspiel zwischen Katalysator und Cokatalysator ist ausschlaggebend für die Effizienz des Gesamtkatalysatorsystems.

b) Die großtechnisch verwendeten Katalysatorsysteme enthalten hochpyrophore, reaktive, flüchtige Aluminiumalkyl-Verbindungen als Cokatalysatoren insbesondere Triethylaluminium. Diese Verbindungen weisen eine hohe Sensibilität gegenüber Verunreinigungen im Reaktionsmedium auf, wie zum Beispiel gegenüber Restfeuchtigkeit der zu polymerisierenden Monomere. Zudem erfordert die sichere Handhabung solcher hochpyrophoren und flüchtigen Verbindungen aufwendige sicherheitstechnische Behälter für ihre Lagerung und für ihren Transport unter absolutem Sauerstoff- und Feuchtigkeitsausschluss. Des weiteren müssen die großtechnischen Anlagen zur Katalysatorpräparation und Polymerisation auf diese Problematik ausgerichtet sein. Dies ist insbesondere ein Problem für technisch weniger entwickelte Länder und Regionen, in denen aufgrund des Klimas hohe Temperaturen und hohe Luftfeuchtigkeiten herrschen.

c) Um in der Ziegler-Natta-Katalyse von prochiralen Olefinen hohe Stereoselektivitäten zu erreichen, müssen bei vielen Prozessen zusätzlich kostenintensive externe Donoren wie z.B. $PhSi(OEt)_3$ eingesetzt werden. Die Eigenschaften der erhaltenen Polymere, welche bestimmt werden u. a. durch Verzweigungsraten, Taktizitäten, Molekulargewichte und Molekulargewichtsverteilungen, konnten bislang noch nicht zur vollen Zufriedenheit optimiert werden, woraus ein ständiger Bedarf an Polymeren mit verbesserten, aber auch neuen Eigenschaften vorhanden ist.

d) Da üblicherweise der Cokatalysator in den Ziegler-Natta-Katalysatoren in hohen Überschüssen zum Katalysator eingesetzt wird und damit die kostenintensivste Komponente ist, besteht ein großes Interesse, das Cokatalysator-Katalysator-Verhältnis zu reduzieren unter Beibehaltung der Aktivität und der Beständigkeit der katalytisch aktiven Spezies.

Aufgabe der vorliegenden Erfindung ist es daher, Katalysatorsysteme für die Homopolymerisation von Propen zur Verfügung zu stellen, welche die unter a), b), c) und d) aufgezählten Eigenschaften bzw. Nachteile nicht aufweisen. Aufgabe der vorliegenden Erfindung war es auch, entsprechende Katalysatorsysteme, weiche an geeignete Träger gebunden sind, in einfacher und preiswerter Weise zur Verfügung zu stellen. Die erfindungsgemäßen Katalysatorsysteme sollten dabei in großtechnischen Anlagen unter einfachen Bedingungen mit einem geringeren Cokatalysator-Katalysator-Verhältnis einsetzbar sein und dabei höhere Aktivitäten als bisher bekannte Systeme aufweisen. Aufgabe der vorliegenden Erfindung ist es auch, entsprechende Katalysatorsysteme zur Verfügung zu stellen, welche unempfindlicher gegenüber Verunreinigungen, insbesondere gegenüber Feuchtigkeit sind.

Die Lösung der Aufgabe erfolgt durch die Verwendung von Stickstoffhaltigen Aluminiumorganyl-Komplexen der allgemeinen Formel (I)

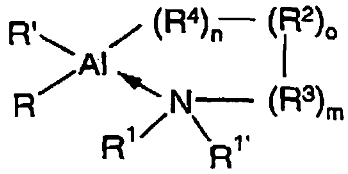

(I)

mit der Maßgabe, dass

$R^1$, $R^{1'}$ $CH_3$
mit
R, R' unabhängig voneinander verzweigtes oder unverzweigtes $C_3$-$C_7$-Alkyl

oder

$R^1$, $R^{1'}$ $C_2H_5$
mit
R, R' unabhängig voneinander verzweigtes oder unverzweigtes $C_1$-$C_7$-Alkyl,

wenn

$R^2$

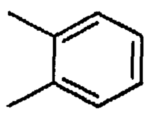

$R^3$ $CH_2$
m,o 1

und

n 0

bedeuten,
oder mit der Maßgabe, dass

R, R', $R^1$, $R^{1'}$ unabhängig voneinander verzweigtes oder unverzweigtes $C_1$-$C_7$-Alkyl,

wenn

$R^2$

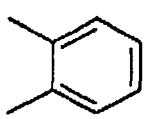

$R^4$ $CH_2$
n, o 1,

und

m 0

bedeuten,
oder mit der Maßgabe, dass

$R^1$, $R^{1'}$ $CH_3$
mit
R, R' unabhängig voneinander verzweigtes oder unverzweigtes $C_3$-$C_7$-Alkyl

oder

$R^1$, $R^{1'}$ $C_2H_5$

mit

R, R' unabhängig voneinander verzweigtes oder unverzweigtes $C_1$-$C_7$-Alkyl,

wenn

$R^2$

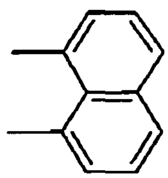

o 1,

und

m, n 0

bedeuten, als Komponente in Koordinationskatalysatoren für die Polymerisation von Propen.

Diese speziellen Verbindungen sind zum Teil neu, andere in der Literatur beschrieben. In den durch die Patentanmeldung DE 19753135 veröffentlichten Beispielen ist die Verwendung dieser Verbindungen für die Polymerisation von Propen nicht beschrieben.

Insbesondere erfolgt die Lösung der der Erfindung zugrunde liegenden Aufgabe durch die Verwendung von Verbindungen gemäß der allgemeinen Formel (I) worin

$R^1$, $R^{1'}$ $CH_3$

und

R, R' unabhängig voneinander i-$C_3H_7$, i-$C_4H_9$, oder ein verzweigtes oder unverzweigtes Alkyl aus der Gruppe $C_5H_{11}$, $C_6H_{13}$ und $C_7H_{15}$

bedeuten. Diese Verbindungen eignen sich besonders für die Verwendung als Katalysatorkomponenten in der Propenpolymerisation.

Aus der Gruppe von Verbindungen führen solche, in denen

$R^1$, $R^{1'}$ $C_2H_5$

und

R, R' unabhängig voneinander $CH_3$, $C_2H_5$ oder i-$C_4H_9$

bedeuten, zu besonders guten Ergebnissen.

Gleichermaßen gut geeignet sind auch solche Komplexe, worin

$R^1$, $R^{1'}$ $C_2H_5$

und

R, R' unabhängig voneinander verzweigtes oder unverzweigtes $C_1$-$C_7$-Alkyl

bedeuten.

Vorzugsweise mit Komplexen der allgemeinen Formel (I), worin

R, R', $R^1$, $R^{1'}$ unabhängig voneinander verzweigtes oder unverzweigtes $C_1$-$C_7$-Alkyl

$R^2$ 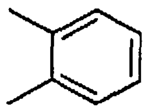

$R^3$ $CH_2$

m, o 1,

n 0

bedeuten, werden verbesserte Katalysatoraktivitäten erzielt.

Entsprechende Stickstoffi-haltige Aluminiumorganyl-Komplexe sind an sich als Cokatalysatoren in Polymerisationsreaktionen von Olefinen einsetzbar.

Es wurde gefunden, dass insbesondere Verbindungen der allgemeinen Formel (I) ausgewählt aus der Gruppe
[2-(Dimethylamino)phen-1-yl]dimethylaluminium,
[2-(Dimethylamino)phen-1-yl]diethylaluminium,
[2-(Dimethylamino)phen-1-yl]dipropylaluminium,
[2-(Dimethylamino)phen-1-yl]dibutylaluminium,
[2-(Diethylamino)phen-1-yl]dimethylaluminium,
[2-(Diethylamino)phen-1-yl]diethylaluminium,
[2-(Dimethylamino)benzyl]dimethylaluminium,
[2-(Dimethylamino)benzyl]dipropylaluminium,
[2-(Dimethylamino)benzyl]dibutylaluminium,
[2-(Diethylamino)benzyl]dimethylaluminium,
[2-(Diethylamino)benzyl]diethylaluminium,
[2-(Dimethylaminomethyl)phen-1-yl]diethylaluminium,
[2-(Dimethylaminomethyl)phen-1-yl]dipropylaluminium,
[2-(Dimethylaminomethyl)phen-1-yl]dibutylaluminium,
[2-(Diethylaminomethyl)phen-1-yl]dimethylaluminium,
[2-(Diethylaminomethyl)phen-1-yl]diethylaluminium,
[2-(Diethylaminomethyl)phen-1-yl]dipropylaluminium,
[2-(Diethylaminomethyl)phen-1 -yl]dibutylaminium,
[8-(Dimethylamino)naphth-1-yl]dipropylaluminium,
[8-(Dimethylamino)naphth-1-yl]dibutylaluminium
als Komponenten in Koordinationskatalysatoren in Polymerisationsreaktionen von Propen eingesetzt werden können.

Erfindungsgemäß sind daher Verbindungen der allgemeinen Formel (I) vorteilhaft als Komponenten in Koordinationskatalysatoren in heterogenen Polymerisationsreaktionen des Propens einsetzbar.

Besonders vorteilhaft lassen sich die Produkteigenschaften durch den Zusatz dieser Verbindungen beeinflussen, da sie gezielt als Stereoselektivitätsvermittler in der Polymerisation des Propens eingesetzt werden können.

Die neuen Koordinationskatalysatoren für Polymerisationsreaktionen enthalten erfindungsgemäß Stickstoff-haltige Aluminiumorganyl-Komplexe der allgemeinen Formel (I), wie durch die Ansprüche 1 - 3 beansprucht, in Kombination mit Übergangsmetallverbindungen der IV. bis VIII. Nebengruppen des Periodensystems der Elemente. Vorzugsweise handelt es sich hierbei um Verbindungen, ausgewählt aus der Gruppe der Halogenide des Titans und Vanadiums. Diese Verbindungen stellen an sich die eigentlichen Katalysatoren in der Polymerisationsreaktion dar.

Erfindungsgemäß sind die Stickstoff-haltigen Aluminiumorganyl-Komplexe der allgemeinen Formel (I), wie durch die Ansprüche 1 - 3 beansprucht, als Cokatalysatoren in Polymerisationsreaktionen von Olefinen verwendbar.

Dieses aus Koordinationskatalysator und Katalysator bestehende System ist üblicherweise auf einem Trägermaterial gebunden. Vorzugsweise ist das erfindungsgemäße Katalysatorsystem auf einem anorganischen Träger, ausgewählt aus der Gruppe $MgCl_2$ und $SiO_2$ oder deren Gemische, gebunden. Das erfindungsgemäße Katalysatorsystem

kann gegebenenfalls interne Donoren wie Ether- oder Ester-Verbindungen oder wie zum Beispiel Benzoesäureethylester, Phthalsäuredimethylester oder dem Fachmann geläufige Donoren und gegebenenfalls auch externe Donoren aus der Gruppe $RSi(OR)_3$ wie $PhSi(OEt)_3$ oder dem Fachmann geläufige externe Donoren enthalten.

Gegenstand der vorliegenden Erfindung ist insbesondere die Verwendung eines solchen Katalysatorsystems in heterogenen Polymerisationsreaktionen von Propylen.

In diesen Reaktionen sind die erfindungsgemäßen Stickstoff-haltigen Aluminiumorganyl-Komplexe der allgemeinen Formel (I) als Cokatalysator und gleichzeitig auch als Stereoselektivitätsvermittler einsetzbar. Die Polymereigenschaften sind durch gezielte Auswahl des Cokatalysators steuerbar. Übemaschenderweise wurde gefunden, daß die Molmassen der mit den erfindungsgemäßen Cokatalysatoren hergestellten Polypropene weitaus über den Molgewichten der mittels $AlEt_3$ hergestellten Polypropene liegen. Damit eignen sich die erfindungsgemäßen Stickstoff-haltigen Aluminiumorganyl-Komplexe besonders zur Herstellung von höhermolekularem Polypropen.

Gegenstand der vorliegenden Erfindung ist weiterhin ein Verfahren zur Herstellung erfindungsgemäßer Katalysatorsysteme zur Polymerisation von Propen.
Je nach Einsatzzweck kann die Herstellung der Katalysatorsysteme erfolgen, indem

(a) eine Trägerung eines Titan- oder Vanadiumhalogenides auf $MgCl_2$ oder $SiO_2$ oder auf einer Kombination aus $SiO_2$ und $MgCl_2$ gegebenenfalls unter Zugabe eines internen Donors wie Ether- oder Ester-Verbindungen wie Benzoesäureethylester, Phthalsäuredimethylester oder dem Fachmann geläufige interne Donoren und gegebenenfalls auch externe Donoren aus der Gruppe $RSi(OR)_3$ wie $PhSi(OEt)_3$ oder dem Fachmann geläufige externe Donoren und einer Aluminiumorganyl-Verbindung der allgemeinen Formel (I) gemäß Anspruch (I), oder durch
(b) Trägerung einer Aluminiumorganyl-Verbindung der allgemeinen Formel (I) gemäß Anspruch (I) auf $MgCl_2$, $SiO_2$ oder $SiO_2$ in Kombination mit $MgCl_2$ und Zugabe eines Titan- oder Vanadiumhalogenides und Zugabe eines internen Donors wie Ether- oder Ester-Verbindungen wie Benzoesäureethylester, Phthalsäuredimethylester oder dem Fachmann geläufige interne Donoren und gegebenenfalls auch externe Donoren aus der Gruppe $RSi(OR)_3$ wie PhSi $(OEt)_3$ oder dem Fachmann geläufige externe Donoren oder durch
(c) Trägerung einer aus einer Aluminiumorganyl-Verbindung der allgemeinen Formel (I) und einem Titan- oder Vanadiumhalogenid generierten aktiven Spezies auf $MgCl_2$ oder $SiO_2$ oder auf einer Kombination aus $SiO_2$ und $MgCl_2$ unter Zugabe eines internen Donors wie Ether- oder Ester-Verbindungen wie Benzoesäureethylester, Phthalsäuredlmethylester oder dem Fachmann geläufige interne Donoren und gegebenenfalls auch externe Donoren aus der Gruppe $RSi(OR)_3$ wie $PhSi(OEt)_3$ oder dem Fachmann geläufige externe Donoren durchgeführt wird.

Überraschenderweise wurde gefunden, daß bei Verwendung der Stickstoff-haltigen Aluminiumorganyl-Verbindungen der allgemeinen Formel (I) in Gegenwart einer auf Magnesiumdichlorid oder $SiO_2$ oder auf einer Kombination aus $SiO_2$ und $MgCl_2$ geträgerten Titan- oder Vanadiumhalogenid-Verbindung gegebenenfalls auch unter Verwendung eines internen Donors wie Ether- oder Ester-Verbindungen wie Benzoesäureethylester, Phthalsäuredimethylester oder dem Fachmann geläufige interne Donoren und gegebenenfalls auch externe Donoren aus der Gruppe $RSi(OR)_3$ wie $PhSi(OEt)_3$ oder dem Fachmann geläufige externe Donoren, ein Katalysatorsystem entsteht, welches hervorragend zur Polymerisation von Propen geeignet ist und dabei Ausbeuten ermöglicht, die weitaus höher sind als die, die das herkömmliche Vergleichsystem $MgCl_2/TiCl_4/AlEt_3$ erreicht. Dabei wurden verschiedene Trägerungsmethoden entwickelt:

(a) Trägerung eines Titan- oder Vanadiumhalogenides auf $MgCl_2$ oder $SiO_2$ oder auf einer Kombination aus $SiO_2$ und $MgCl_2$ unter Zugabe eines internen Donors wie Ether- oder Ester-Verbindungen wie Benzoesäureethylester, Phthalsäuredimethylester oder dem Fachmann geläufige interne Donoren und gegebenenfalls auch externe Donoren aus der Gruppe $RSi(OR)_3$ wie $PhSi(OEt)_3$ oder dem Fachmann geläufige externe Donoren und Zugabe der Stickstoff-haltigen Aluminiumorganyl-Verbindung der allgemeinen Formel (I),
(b) Trägerung der Stickstoff-haltigen Aluminiumorganyl-Verbindung der allgemeinen Formel (I) auf $MgCl_2$ oder $SiO_2$ oder auf einer Kombination aus $SiO_2$ und $MgCl_2$ und Zugabe eines Titan- oder Vanadiumhalogenides und Zugabe eines internen Donors wie Ether- oder Ester-Verbindungen wie Benzoesäureethylester, Phthalsäuredimethylester oder dem Fachmann geläufige interne Donoren und gegebenenfalls auch externe Donoren aus der Gruppe RSi $(OR)_3$ wie $PhSi(OEt)_3$ oder dem Fachmann geläufige externe Donoren und
(c) Trägerung einer bereits aus beiden Komponenten generierten aktiven Spezies auf $MgCl_2$ oder $SiO_2$ oder auf einer Kombination aus $SiO_2$ und $MgCl_2$ unter Zugabe eines internen Donors wie Ether- oder Ester-Verbindungen wie Benzoesäureethylester, Phthalsäuredimethylester oder dem Fachmann geläufige interne Donoren und gegebenenfalls auch externe Donoren aus der Gruppe $RSi(OR)_3$ wie $PhSi(OEt)_3$ oder dem Fachmann geläufige externe Donoren.

Die durchgeführten Versuche ergaben, daß die Methode (a) die höchsten Aktivitäten während der Polymerisation von Propen liefert. Es können fast doppelt so hohe Aktivitäten im Vergleich zum Stand der Technik erhalten

werden. Insbesondere werden bei kleinen Al:Ti-Verhältnissen sehr hohe Aktivitäten erhalten, so sind die Aktivitäten bei einem Al:Ti-Verhältnis von 2:1 um den Faktor 10-18 höher im Vergleich zum Stand der Technik. Die Versuche ergaben weiterhin, daß die Methode (b) Polypropene mit den höchsten Pentadenisotaxien liefert. Dieses zeigt, daß die geträgerten Stickstoff-haltigen Aluminiumorganyl-Komplexe der allgemeinen Formel (I) über das Stickstoff-Atom aspezifisch arbeitende Titan-Zentren blockieren. Beim Stickstoff freien Referenzsystem $AlEt_3$ tritt dieser positive Effekt nicht auf.

Es wurde gefunden, daß sich die Eigenschaften der Polypropylene durch die Wahl des Cokatalysators steuern lassen.

Vorteilhafterweise lassen sich die erfindungsgemäßen Katalysatorsysteme unter Prozeß-erleichternden Bedingungen einsetzen. Letzteres ist insbesondere der Fall bei Verwendung eines niedrigeren Cokatalysator-Katalysator-Verhältnisses als bisher üblich. Insbesondere durch Veränderung dieses Verhältnisses sind erfindungsgemäß die Polymerisationseigenschaften zu steuern.

Als weitere vorteilhafte Eigenschaft wurde gefunden, daß die neuen Katalysatorsysteme gegenüber Luft, Feuchtigkeit und Verunreinigungen im Reaktionssystem recht stabil sind und somit technisch weniger aufwendige Behälter zur Lagerung und zum Transport bzw. technisch weniger aufwendige Anlagen zur Katalysator-Herstellung und zur Olefinpolymerisation erfordern. Auch weisen die neuen Katalysatorsysteme unter Reaktionsbedingungen eine hohe thermische Stabilität und Lebensdauer auf.

Weiterhin wurde überraschenderweise gefunden, daß die neuen Katalysatorsysteme, bestehend aus $MgCl_2$ oder $SiO_2$ oder einer Kombination aus $SiO_2$ und $MgCl_2$, einer Titan- oder Vanadiumhalogenid-Verbindung, eines internen Donors und einer Aluminium-Verbindung der allgemeinen Formel (I), während der Polymerisation von Propen ohne Zugabe von externen Donoren auch stereoselektiv wirken.

Damit können die Aluminiumorganyl-Verbindungen der allgemeinen Formel (I) in den neuen Katalysatorsystemen gleichzeitig mehrere Funktionen übernehmen:

Zum einen wirken sie als Cokatalysatoren und zum anderen wirken sie als Stereoselektivitäts-Vermittler. Damit wird es möglich, die Anzahl der notwendigen Katalysatorkomponenten um eine Komponente zu reduzieren. Die dritte Funktion besteht in der Steuerung der molekularen Struktur der Polymere wie Molekulargewichte, Molekulargewichtsverteilungen, Taktizitäten und Verzweigungen und damit der Polymereigenschaften wie Härte, Steifigkeit, Zähigkeit, Verschweißbarkeit, Transparenz, Gasdurchlässigkeit und Verarbeitbarkeit.

Eine Reduzierung der Anzahl der Katalysator-Komponenten trägt neben der gefundenen höheren thermischen Stabilität und geringeren Sauerstoff- und Feuchtigkeitsempfindlichkeit noch zusätzlich zur allgemeinen Prozesserleichterung bei der Katalysatorherstellung und Propenpolymerisation bei.

Die geringe Sauerstoff- und Feuchtigkeitsempfindlichkeit der Aluminium-Verbindungen der allgemeinen Formel (I), die eine bequemere und sicherere Handhabung ermöglichen, wird durch die intramolekularstabilisierende Aminogruppe unter koordinativer Stabilisierung des Aluminium-Zentrums erreicht.

Die Herstellung der erfindungsgemäßen Stickstoff-haltigen Aluminiumorganyl-Komplexe der allgemeinen Formel (I),
worin

R, R' unabhängig voneinander $CH_3$, $C_2H_5$, i-$C_4H_5$
$R^1$, $R^{1'}$ unabhängig voneinander $CH_3$, $C_2H_5$
$R^2$ ein unsubstituierter Kohlenwasserstoff, ausgewählt aus der Gruppe

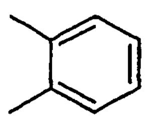 und 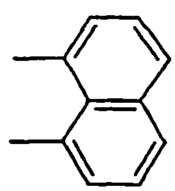 ,

$R^3$, $R^4$ $CH_2$
und unabhängig voneinander m und n = 0 oder 1 und o = 1 bedeuten, kann in einfacher Weise erfolgen, indem eine Verbindung der allgemeinen Formel (II)

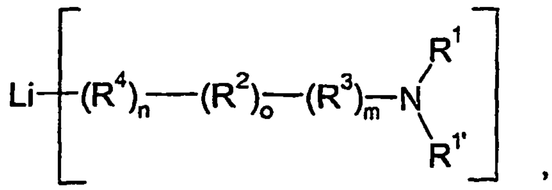

(II)

worin $R^1$, $R^{1'}$, $R^2$, $R^3$ und $R^4$ die oben gegebenen Bedeutungen haben, mit einer Verbindung der allgemeinen Formel (III)

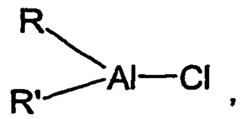

(III)

worin R und R' die oben gegebenen Bedeutungen haben,
in einem aprotischen Lösungsmittel bei einer Temperatur im Bereich von -50 bis +30 °C umgesetzt wird und das entstandene Reaktionsprodukt abgetrennt wird. Vorzugsweise wird die Umsetzung unter Schutzgasatmosphäre durchgeführt. Als Schutzgase können hierbei Stickstoffgas oder Edelgase, wie Helium oder Argon dienen.
Bevorzugt werden die Edukte im äquimolaren Verhältnis zueinander in der Reaktion eingesetzt. Je nach Reaktivität der beiden Reaktionspartner kann es jedoch auch sinnvoll sein, eine Verbindung der allgemeinen Formel (III) im Überschuss zum Reaktionsgemisch hinzuzufügen.

Zur Durchführung der Reaktion können als aprotische Lösungsmittel Lösungsmittel ausgewählt aus der Gruppe Toluol, Xylol, Pentan, Cyclopentan, Hexan, Cyclohexan, und Heptan oder deren Gemische verwendet werden.

Um eine möglichst vollständige Reaktion zu erreichen, ist es sinnvoll, nach dem Vermischen beider Reaktionspartner bei niedriger Temperatur das Reaktionsgemisch für einige Zeit ohne Kühlung nachzurühren, wobei das Reaktionsgemisch sich auf Raumtemperatur erwärmen kann.

Die durch die Reaktion entstandenen Reaktionsprodukte lassen sich nach dem Fachmann bekannten Methoden abtrennen und falls nötig aufreinigen. Vorzugsweise erfolgt die Abtrennung durch destillative Methoden. Insbesondere bevorzugt werden die Produkte durch fraktionierte Destillation abgetrennt. Je nach Siedepunkt des entstandenen Reaktionsprodukts erfolgt diese Destillation unter vermindertem Druck.

Wie beschrieben, bestehen die neuen Katalysatorsysteme aus Träger, Katalysator, Donor und Cokatalysator:

> Als Cokatalysatoren dienen die Stickstoff-stabilisierten Aluminiumorganyl-Verbindungen der allgemeinen Formel (I), in der unabhängig von einander drei Organyl-Gruppen kovalent an das Aluminium-Atom gebunden sind. Eine dieser Organyl-Gruppe trägt am Ende eine AminoFunktion, die über das Stickstoff-Atom mit dem Aluminium-Atom koordinativ verbunden ist, so daß sich eine zyklische Struktureinheit ausbildet. An der Amino-Gruppe sind zwei voneinander unabhängige Organyl-Substituenten gebunden. Die Organyl-Einheit zwischen dem Aluminium- und dem Stickstoff-Atom kann zum Beispiel eine Naphthyl-, Phenyl-, Benzyl oder Alkyl-Gruppe beinhalten, die unsubstituiert oder einfach oder mehrfach alkyliert oder fluoriert ist. Bevorzugt werden Verbindungen, die einen aromatischen Baustein in dieser Organyl-Einheit besitzen.

Als Katalysatoren dienen Übergangsmetallverbindungen der IV. bis VIII. Nebengruppe des Periodensystems der Elemente, insbesondere Übergangsmetallverbindungen aus der IV. und V. Nebengruppe des Periodensystems, insbesondere Titan- und Vanadiumhalogenid-Verbindungen. Geeignete Verbindungen sind beispielsweise $TiCl_4$ und $VCl_4$.

Als Katalysatorträger kann wasserfreies $MgCl_2$ dienen oder $SiO_2$ oder eine Kombination aus $SiO_2$ und $MgCl_2$.

Als Donor dienen interne Donoren wie Ether- oder Ester-Verbindungen wie Benzoesäureethylester, Phthalsäuredimethylester oder dem Fachmann geläufige interne Donoren und gegebenenfalls auch externe Donoren aus der Gruppe $RSi(OR)_3$ wie $PhSi(OEt)_3$ oder andere dem Fachmann geläufige externe Donoren.

Die Herstellung der erfindungsgemäßen geträgerten Katalysatorsysteme erfolgt nach einem Verfahren, welches anhand von im folgenden Text gegebenen Beispielen offenbart ist. Bei diesen Beispielen handelt es sich um spezielle Ausführungsformen. Dem Fachmann ist es durch sein Fachwissen möglich, die darin gegebenen Mittel durch entsprechende gleichwirkende Mittel zu ersetzen.

Zur Herstellung der geträgerten Katalysatorsystemen können als Lösemittel aprotische, unpolare Solventien wie Pentan, Hexan, Heptan, Octan, Benzol, Toluol oder Xylol dienen.

Es hat sich gezeigt, daß wirkungsvolle Systeme erhalten werden, wenn das Cokatalysator/Katalysator-Verhältnis zwischen 1:1 und 80:1, vorzugsweise zwischen 2:1 und 20:1 liegt.

Es wurde gefunden, daß die Verwendung der Stickstoff-haltigen Aluminiumorganyl-Verbindungen der allgemeinen Formel (I) als Cokatalysatoren in der Propen-Polymerisation zu einer Aktivitätssteigerung auf nahezu das Doppelte im Vergleich zu den herkömmlichen Katalysatorsystemen bei Verwendung herkömmlicher Al:Ti-Verhältnisse führt. Zudem kann in den Katalysatorsystemen das Cokatalysator-Katalysator-Verhältnis bis zu 1:1 oder 2:1 verringert werden, ohne zu Aktivitätsverlusten zu führen. Die bei diesen niedrigen Al:Ti-Verhältnissen erhaltenen Aktivitäten liegen um einen Faktor von 10 bis 18 höher als die mit $AlEt_3$ erhaltenen Aktivitäten. Auf diese Weise können höhere Ausbeuten an Polypropylen erreicht werden, und die Cokatalysator-Menge kann in den Katalysatorsystemen drastisch reduziert werden. Damit können die erfindungsgemäßen Katalysatorsysteme wesentlich kostengünstiger hergestellt werden als entsprechende, bisher bekannte Systeme. Es ist möglich, das Cokatalysator-Katalysator-Verhältnis auf Werte zwischen 5 : 1 und 1 : 1 zu senken, ohne die Ausbeuten und die angestrebte Produktqualität in wesentlichem Maße zu beeinflussen.

Es werden Polypropene mit-deutlich höheren Molmassen zwischen 200000 und 800000 g/mol erhalten.

Die Katalysator-Konzentration liegt zwischen $10^{-2}$ und $10^{-6}$ mol/l, vorzugsweise zwischen $10^{-3}$ und $10^{-5}$ mol/l.

Die Katalysator- bzw. Cokatalysator-Beladung auf $MgCl_2$ liegt zwischen 0.5 und 5 mmol/g, vorzugsweise zwischen 1 und 3 mmol/g.

Die neuen Katalysatorsysteme ermöglichen durch ihre geringere Feuchtigkeits- und Luftempfindlichkeit und durch ihre geringere Empfindlichkeit gegenüber Verunreinigungen während ihres Einsatzes in einer Polymerisation eine sicherere Handhabung und bessere Reproduzierbarkeit der Ergebnisse aber auch eine höhere Langzeitstabilität im Vergleich zu den Systemen des Stands der Technik.

Zum besseren Verständnis und zur Verdeutlichung der Erfindung werden im folgenden Beispiele gegeben, die im Rahmen des Schutzbereichs der vorliegenden Erfindung liegen. Diese sind jedoch aufgrund der allgemeinen Gültigkeit des beschriebenen Erfindungsprinzips nicht geeignet, den Schutzbereich der vorliegenden Anmeldung nur auf diese Beispiele zu reduzieren. Weiterhin ist der Inhalt der zitierten Patentanmeldung P 10010796 als Teil der Offenbarung der Erfindung der vorliegenden Beschreibung anzusehen.

**Beispiele zur Herstellung der Katalysatorsysteme:**

a) Herstellung der neuen Cokatalysatoren:

*[2-(Diethylaminomethyl)phen-1-yl]diethylaluminium*

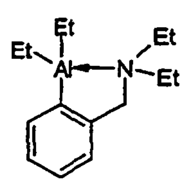

Zu einer auf -10 °C gekühlten Suspension von 14,98 g (88.54 mmol) [2-(Diethylaminomethyl)phen-1-yl]lithium in 130 ml Toluol wurden 10,1 ml (88.54 mmol) Diethylaluminiumchlorid in einer inerten Stickstoffatmosphäre getropft (Als Schutzgas sind auch andere Inertgase wie z. B. Argon geeignet.). Nach langsamen Erwärmen auf Raumtemperatur wurde das Gemisch zur Vervollständigung der Reaktion 16 h gerührt. Nach Filtration über eine D4-Fritte und destillativer Entfernung des Lösungsmittels wurden 17,64 g [2-(Diethylaminomethyl)phen-1-yl]diethylaluminium (71,3 mmol/181 %) als farblose Flüssigkeit durch langsame fraktionierte Destillation aus dem Rückstand erhalten.
Sdp.: 115 °C / $4 \cdot 10^{-2}$ mbar
$^1$H-NMR ($C_6D_6$, 200.1 MHz): δ 0.16 - 0.29 [m, 4 H, Al(C**HH**'$CH_3$)$_2$]; 0.53 [t, $^3J$=7.31 Hz, 6 H, Al($CH_2$C**H**$_3$)$_2$]; 1.40 [t,$^3J$=8.17 Hz, 6 H, N($CH_2$C**H**$_3$)$_2$]; 2.18 - 2.52 [m, 4 H, N(C**HH**'$CH_3$)$_2$]; 3.34 (s, 2 H, $NCH_2$); 6.68 - 6.91 (m, 1 H, $H_{ar}$); 7.19 - 7.24 (m, 2 H, $H_{ar}$); 7.88 - 7.93 (m, 1 H, $H_{ar}$).
$^{13}$C-NMR ($C_6D_6$, 50.32 MHz): δ 0.3 [Al(**C**$H_2CH_3$)$_2$]; 8.1, 10.3 [Al($CH_2$**C**$H_3$)$_2$, N($CH_2$**C**$H_3$)$_2$]; 44.2 [N(**C**$H_2CH_3$)$_2$]; 60.6 ($NCH_2$); 123.7, 126.8, 127.2, 128.3, 137.4, 143.6 ($C_{ar}$). $^{27}$Al-NMR ($C_6D_6$, 104.3 MHz): δ 172.

*[2-(Dimethylaminomethyl)phen-1-yl]diisobutylaluminium*

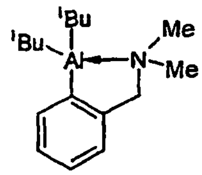

Zu einer auf 0 ˚C gekühlten Suspension von 15,36 g (108.8 mmol) [2-(Dimethylaminomethyl)phen-1-yl]lithium in 400 ml Pentan wurden 20 ml (102.5 mmol) Diisobuttylaluminiumchlorid in einer inerten Stickstoffatmosphäre getropft (Als Schutzgas sind auch andere Inertgase wie z. B. Argon geeignet.). Nach langsamen Erwärmen auf Raumtemperatur wurde das Gemisch zur Vervollständigung der Reaktion 40 h gerührt. Nach Filtration über eine D4-Fritte und destillativer Entfernung des Lösungsmittels wurden 23,94 g [2-(Dimethytaminomethyl)phen-1-yl]diisobutylaluminium (85 %) als farblose Flüssigkeit durch langsame fraktionierte Destillation aus dem Rückstand erhalten.
Sdp.: 102-107 ˚C / $2.10^{-2}$ mbar
$^1$H-NMR ($C_6D_6$, 200.1 MHz): δ 0.21 [2 x dd, 4 H, Al(CHH')$_2$]; 1.21 [2 x d, 12 H, Al(CH$_2$CHC**H**$_3$C**H**$_{3'}$)$_2$]; 1.78 [s, 6 H, N (CH$_3$)$_2$]; 2.09 [septett, 2 H, Al(CH$_2$C**H**)$_2$]; 3.17 (s, 2 H, NCH$_2$); 6.85 (dd, 1 H, C$_{ar}$**H**-3); 7.21 (m, 2 H, C$_{ar}$**H**-4,5); 7.91 (dd, 1 H, C$_{ar}$**H**-6).
$^{13}$C-NMR ($C_6D_6$, 50.32 MHz): δ 21.5 [breit, Al(**C**H$_2$)$_2$]; 27.1 [Al(CH$_2$**C**H)$_2$; 28.8 (AlCH$_2$CH**C**H$_3$CH$_3$')$_2$]; 28.9 (AlCH$_2$CHCH$_3$**C**H$_3$')$_2$]; 45.4 [N(CH3)$_2$]; 67.5 (NCH$_2$); 123.8 (CH$_{ar}$); 127.0 (CH$_{ar}$); 137.5 (CH$_{ar}$); 143.5 (CH$_2$C$_{ar}$); 152.5 (sehr breit, AlC$_{ar}$).
$^{27}$Al-NMR ($C_6D_6$, 104.3 MHz): δ 181.

*[2-(Dimethylamino)benzyl]dimethylaluminium*

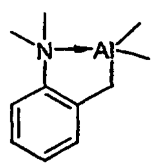

Zu einer auf -30 ˚C gekühlten Suspension von 15,21 g (107.8 mmol) [2-(Dimethylamino)benzyl]lithium in 250 ml Hexan wurden 10,0 ml (107.8 mmol) Dimethylaluminiumchlorid in einer inerten Stickstoffatmosphäre getropft. Nach langsamen Erwärmen auf Raumtemperatur wurde das Gemisch zur Vervollständigung der Reaktion 14 h gerührt. Nach Filtration über eine D4-Fritte und destillativer Entfernung des Lösungsmittels wurden 11,95 g [2-(Dimethylamino)benzyl] dimethylaluminium (62,5 mmol / 58 %) als farblose Flüssigkeit durch langsame fraktionierte Destillation aus dem Rückstand erhalten.
Sdp.: 58 ˚C / $2 \cdot 10^{-2}$ mbar
$^1$H-NMR ($C_6D_6$, 200.1 MHz): δ 0.55 [s, 6 H, Al(CH$_3$)$_2$]; 1.47 (s, 2 H, AlCH$_2$); 2.09 [s, 6 H, N(CH$_3$)$_2$]; 6.58 - 6.63 (m, 1 H, H$_{ar}$); 6.83 - 7.01 (m, 2 H, H$_{ar}$); 7.26 - 7.30 (m, 1 H, H$_{ar}$).
$^{13}$C-NMR ($C_6D_6$, 50.32 MHz): δ 10.7 [Al(CH$_3$)$_2$]; 13.8 (AlCH$_2$); 46.3 [N(CH$_3$)$_2$]; 118.0, 124.8., 127.4, 132.9, 143.0, 149.0 (C$_{ar}$).
$^{27}$Al-NMR ($C_6D_6$, 104.3 MHz): δ 189.

*[2-(Dimethylamino)benzyl]diethylaluminium*

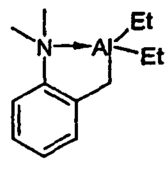

Zu einer auf -30 ˚C gekühlten Suspension von 8,40 g (59,5 mmol) 2-Dimethylaminobenzyllithium in 150 ml Toluol wurden 7,17 g (7,5 ml; 59,5 mmol) Diethylaluminiumchlorid in einer inerten Stickstoffatmosphäre getropft. Nach langsamen Erwärmen auf Raumtemperatur wurde das Gemisch zur Vervollständigung der Reaktion 15 h gerührt. Nach Filtration über eine D4-Fritte und destillativer Entfernung des Lösungsmittels wurden 8,05 g [2-(Dimethylamino)benzyl] diethylaluminium (36,7 mmol / 62 %) als farblose Flüssigkeit durch langsame fraktionierte Destillation aus dem Rückstand erhalten.
Sdp.: 92 ˚C /$2{\cdot}10^{-2}$ mbar
$^{1}$H-NMR ($C_6D_6$; 200,1 MHz): δ -0,06 - 0,23 [m, 4 H, Al(C**HH**'$CH_3$)$_2$]; 1,22 [t, $^{3}$J=8,2 Hz, 6 H, Al($CH_2$C**H**$_3$)$_2$]; 1,45 (s, 2 H, Al$CH_2$N); 2,14 [s, 6 H, N($CH_3$)$_2$]; 6,59 - 6,63 (m, 1 H, $H_{ar}$); 6,82 - 7,00 (m, 2 H, $H_{ar}$); 7,25 - 7,29 (m, 1 H, $H_{ar}$).
$^{13}$C-NMR ($C_6D_6$; 50,32 MHz): δ -0,8 [Al(**C**$H_2CH_3$)$_2$]; 9,9 [Al$CH_2$N]; 11,4 [Al($CH_2$**C**$H_3$)$_2$]; 46,3 [N($CH_3$)$_2$]; 117,6; 124,7; 127,5; 132,9; 143,2; 149,1 ($C_{ar}$).
$^{27}$Al-NMR ($C_6D_6$; 104,3 MHz): δ 185.

*[8-(Dimethylamino)naphth-1-yl]diisobutylaluminium*

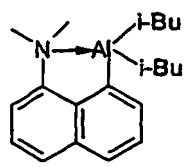

Zu einer auf -40˚C gekühlten Suspension aus 12.1 g (0.048 mmol) [8-(Dimethylamino)naphth-1-yl]lithium-Etherat und 100 ml Diethylether wurden 9.5 g (0.048 mmol) Diisobutylaluminiumchlorid in einer inerten Stickstoffatmosphäre getropft. Nach langsamen Erwärmen auf Raumtemperatur wurde das Gemisch zur Vervollständigung der Reaktion noch 24 h gerührt. Nach Filtration über eine D4-Fritte und destillativer Entfernung des Lösungsmittels wurden 10.6 g [8-(Dimethylamino)naphth-1-yl]diisobutylaluminium (71%) als farblose, ölige Flüssigkeit durch fraktionierte Destillation aus dem Rückstand erhalten.
Sdp.: 147 ˚C /$10^{-2}$ mbar
$^{1}$H-NMR (200.1 MHz, $C_6D_6$): δ 0.20 [<u>A</u>BX, 2H, $^{3}$J 6.9 Hz, $^{2}$J 14.0 Hz (($CH_3$)$_2$-CH-CH*H'*)$_2$Al]; d 0.36 [A<u>B</u>X, 2H, $^{3}$J 6.9 Hz, $^{2}$J 14.0 Hz (($CH_3$)$_2$-CH-C*H*H')$_2$Al]; 1.18 [d, 12H, $^{3}$J 6.7 Hz, ((C*H*$_3$)$_2$-CH-CHH')$_2$Al]; 2.06 [m, AB<u>X</u>, 2 H, $^{3}$J 6.7 Hz, $^{3}$J 6.9 Hz, (($CH_3$)$_2$-C*H*-CHH')$_2$Al]; 2.28 [s, 6H, - N(C*H*$_3$)$_2$]; 6.74 (dd, $^{3}$J 7.5 Hz, $^{4}$J 1 Hz, 1 H, H-$C_7$); 7.13 (dd, $^{3}$J 8.2 Hz, $^{3}$J 7.5 Hz, 1 H, H-$C_6$);); 7.47 (dd, $^{3}$J 8.2 Hz, $^{3}$J 6.2 Hz, 1 H, H-$C_3$); 7.55 (dd, $^{3}$J 8.2 Hz, $^{4}$J 1 Hz, 1 H, H-$C_5$); 7.60 (dd, $^{3}$J 8.2 Hz, $^{4}$J 1.3 Hz, 1H, H-$C_4$); 8.08 (dd, $^{3}$J 6.2 Hz, $^{4}$J 1.3 Hz, 1 H, H-$C_2$).
$^{13}$C-NMR (100.6 MHz, $C_6D_6$): δ 22.66 [breit, (($CH_3$)$_2$-CH-$CH_2$)$_2$Al]; 27.12 [($CH_3$)$_2$-CH-$CH_2$)$_2$Al]; 28.85 [(*C*H$_3$)$_2$-CH-$CH_2$)$_2$Al]; 49.00 [-N($CH_3$)$_2$]; 114.27 ($C_7$); 124.73 ($C_6$); 125.92 ($C_4$); 127.81 ($C_5$); 127.86 ($C_3$); 133.61 ($C_{10}$); 135.17 ($C_2$); 137.31 ($C_9$); 149.8 (sehr breit, $C_1$); 151.25 ($C_8$).
$^{27}$Al-NMR (104.3 MHz, $C_6D_6$): δ 195 ($W_{1/2}$ = 13.000 Hz).

<u>b) Trägerung der Aluminiumorganylkomplexe der allgemeinen Formel (I) auf $MgCl_2$</u>

$$\text{Aluminiumorganyl: } n_{Al\text{-}Cokat}\,[mol] = m_{Al\text{-}Cokat} / M_{Al\text{-}Cokat}$$

$$MgCl_2: \quad m_{MgCl2} = n_{Al\text{-}Cokat} / \text{theor. Beladung [mol(Al)/g]} - m_{Al\text{-}Cokat}$$

Kohlenwasserstoff: für,3-8 g Gesamtmenge ($m_{MgCl2}$ + $m_{Al\text{-}Cokat}$) 50 ml

Alle Arbeiten werden unter Schutzgas ausgeführt. Der verwendete Kohlenwasserstoff wird vor der Reaktion getrocknet und destilliert. In einem ausgeheizten Kolben mit Schlenkansatz werden das Aluminiumorganyl und das Magnesiumchlorid vorgelegt. Die entsprechenden Mengen werden aus der gewünschten theoretischen Beladung berechnet, die im Bereich von 1-2*$10^{-3}$ mol(Al)/g liegen sollte. Je nach Löslichkeit des Aluminiumorganyls wird Pentan, Hexan, Heptan, Octan, Benzol oder Toluol hinzugegeben. Danach wird die Reaktionsmischung 12 Stunden bei Raumtemperatur gerührt. Anschließend wird das Lösungsmittel im Vakuum bei 60-120 mbar entfernt.

Die theoretische Beladung wird nach folgender Gleichung berechnet:

$$(m_{Al\text{-}Cokat}/M_{Al\text{-}Cokat}) / (m_{Al\text{-}Cokat}+m_{MgCl2}) = \text{theor. Beladung [mol(Al)/g]}$$

| Geträgerte Komponente | Beladung [mmol/g] | Geträgerte Komponente | Beladung [mmol/g] |
|---|---|---|---|
| 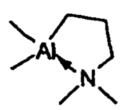 | 1.5 | 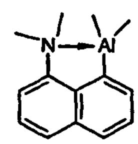 | 1.0 |

*Trägerung von (3-Dimethylaminopropyl)dimethylatuminium auf $MgCl_2$*

Al-Cocat: 1.77 g (1.2*$10^{-2}$ mol) $M_{Al\text{-}Cocat}$ = 143.21 g/mol

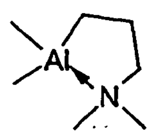

$MgCl_2$: 6.50 g (6,8*$10^{-2}$ mol) $M_{MgCl2}$ = 95.21 g/mol
Pentan: 50 ml

Alle Arbeiten wurden unter Schutzgas ausgeführt. Pentan wurde vor der Reaktion getrocknet und destilliert. In einem ausgeheizten 100 ml-Kolben mit Schlenkansatz wurden das Aluminiumorganyl und das Magnesiumchlorid vorgelegt. Nach Zugabe von 50 ml Pentan wurde die Reaktionsmischung 12 Stunden bei Raumtemperatur gerührt. Anschließend wurde das Lösungsmittel 2 Stunden im Vakuum bei 100-120 mbar entfernt. Man erhielt ein hellgraues Pulver.

Die theoretische Beladung wurde nach folgender Gleichung berechnet:

$$(m_{Al\text{-}Cocat}/M_{Al\text{-}Cocat}) / (m_{Al\text{-}Cocat}+m_{MgCl2}) = 1.5{*}10^{-3}\ \text{mol/g}$$

<u>c) Trägerung von $TiCl_4$ auf $MaCl_2$</u>

$MgCl_2$ in 50 ml Pentan suspendieren, $TiCl_4$ zugeben, 12 Stunden bei 25°C unter Inertgasatmosphäre rühren, Pentan bei 80 mbar entfernen. Beladung : 1.4 mmol/g.

**Beispiele zur Anwendung der neuen Katalysatorsysteme in der Propenpolymerisation:**

Die Polymerisation von Propen wird in bekannter Weise in Lösungs-, Suspensions- oder Gasphasenpolymerisation kontinuierlich oder diskontinuierlich durchgeführt bei einer Temperatur von 0 °C bis +200 °C, vorzugsweise zwischen +20 und +140 °C und einem Druck von 1 bis 20 bar, vorzugsweise von 2 bis 10 bar. Als Lösemittel dienen Hexan, Heptan, Octan, Propen oder Toluol.

Die neuen Katalysatorsysteme ermöglichen die Herstellung von Homo-, Co- und Blockpolymere, vorzugsweise die Homopolymere Polypropylen.

Die Aktivitäten der Katalysatorsysteme sind in der Propylenpolymerisation höher als die mit dem herkömmlichen Katalysatorsystem $MgCl_2$, $TiCl_4$ und $AlEt_3$, auch unter Verwendung eines geringeren Cokatalysator-Katalysator-Verhältnisses.

Mit allen neuen Katalysatorsystemen wurden feinkörnige Polymere erhalten. Die Schmelztemperaturen und Molmassen der Polypropene liegen in interessanten Bereichen im Hinblick auf deren technische Verarbeitung.

Die mit den auf $MgCl_2$ geträgerten Stickstoff-stabilisierten Aluminiumorganylen hergestellten Polypropene weisen höhere Pentadenisotaxien als bei ihrer Verwendung in gelöster Form mit $MgCl_2/TiCl_4$ auf. Es werden zum Teil höhere Stereoselektivitäten als mit $AlEt_3$ als Cokatalysator erzielt. Dieses Resultat kann von der effektiven Blockierung aspezifisch arbeitender Ti-Zentren auf der Oberfläche von $MgCl_2$ mittels der Stickstoff-stabilisierten Aluminiumorganyle verursacht werden. Obwohl mit geträgerten Stickstoff-stabilisierten Aluminiumorganylen höherer Stereoselektivitäten erzielbar sind, ist der Polymerisation mit $MgCl_2/TiCl_4$ und gelösten Stickstoff-stabilisierten Aluminiumorganylen Vorrang einzuräumen, da sie in der Regel zu größeren Aktivitäten führt.

Die Katalysatorsysteme wirken ohne Zugabe von Donoren stereoselektiv in der Propylenpolymerisation. $^{13}C$-NMR-Analysen der Polypropylenproben zeigen lineare Strukturen mit isotaktischen Sequenzlängen mit einer deutlich höheren Häufigkeiten der mmmm-Pentaden im Vergleich zum $AlEt_3$. Eine weitere Verbesserung der Stereoseleküvitäten lassen sich durch Einsatz von Donoren erreichen.

Durchführung der Polymerisation von Propylen

Alle Polymerisationen wurden unter einer Argon-Inertgasatmosphäre unter Einsatz von Schlenk-Techniken durchgeführt. Die Polymerisationen wurden in einem 1 l Glasautoklaven der Firma Büchi, durchgeführt. Der Reaktor wurde vor jedem Versuch bei 95 °C eine Stunde im Ölpumpenvakuum evakuiert und zwischendurch mehrfach mit Argon gespült. Der Autoklav wurde nacheinander mit Lösungsmittel und dem in Lösungsmittel suspendierten geträgerten Cokatalysator befüllt. Danach wurde das Monomer mit dem gewünschten Druck aufgepresst. Nach dem Sättigen der im Reaktor befindlichen Suspension mit dem Monomer wurde die Polymerisation durch Injektion einer Lösung von $TiCl_4$ gestartet. Bei den Experimenten mit gelösten Aluminiumalkylen und geträgertem $TiCl_4$ erfolgte zunächst die Zugabe der Katalysatorsuspension. Die Polymerisationen wurden dann durch Injektion einer Lösung des Cokatalysators gestartet. Die isobare Reaktionsführung wurde durch die Monomerversorgung des Reaktors, bestehend aus einem Druckregler und einem Massendurchflußregler der Firma Brooks Instruments, gewährleistet.

Die Polymerisationen wurden durch Injektion von 5 ml Ethanol beendet. Die Polymerisationssuspension wurde mit verdünnter Salzsäure versetzt und über Nacht gerührt. Die organische Phase wurde mit einer gesättigten Natriumhydrogencarbonat-Lösung neutralisiert und mit Wasser gewaschen. Das Lösungsmittel wurde bis zur Massenkonstanz des Polymers im Ölpumpenvakuum entfernt.

Polymeranalytik

Die Thermogramme wurden mit einem Mettler-Toledo Differentialcalorimeter 821 e mit einer Heizrate von 20 °C/min aufgenommen. Die im 2$^{nd}$ Heat erhaltenen Werte wurden als Schmelzpunkte angegeben.

Die Viskositätsmittel der Molmassen $M_\eta$ wurden mit Hilfe eines Ubbelohde Viskosimeters ermittelt. Durch Lösen von ca. 50 mg des Polymers in 50 ml Decahydronaphthalin wurden die Proben hergestellt. Die Durchlaufzeiten wurden mittels eines Viskoboys der Firma LAUDA gemessen. Die Mark-Houwink-Konstanten wurden aus *T. G. Scholte, N. L. J. Meijerink, H. M. Schoeffeleers, A. M. G. Brands, J. Appl. Polym. Sci.* ***29*** *(1984) 3763* entnommen.

Für die Aufnahme der $^{13}C$-NMR-Spektren wurde ein BRUKER-MSL 300-Gerät verwendet. Bei einer Messung wurden üblicherweise 1000 Scans bei einer Meßfrequenz von 75.47 MHz und einer Temperatur von 100 °C aufgenommen. Der Pulswinkel betrug dabei 60 ° und das Relaxationsdelay 6 s. Durch Ansetzen einer Lösung von 10 Massenprozent Polymer in einer Mischung aus Perchlorbutadien und 1,1,2,2-Tetrachlordideuteroethan wurden die NMR-Proben hergestellt.

Tabelle 1:

| Polymerisation von Propylen mit auf $MgCl_2$ geträgerten Aluminiumorganyl-Verbindungen und $TiCl_4$ bei 30°C. Polymerisationsbedingungen: $T_p$ = 30 °C, $p_{Monomer}$ = 2 bar, $c_{Ti}$ = $10^{-5}$ mol/l, Al/Ti = 5, $t_P$ = 60 min. | | | | | |
|---|---|---|---|---|---|
| Cokatalysator | Aktivität [$kg_{PP}$/ ($mol_{\eta}$ $C_{Propen}$ h)] | $T_m$ [°C] | Kristallinität [%] | η [ml/g] | $M_{\eta}$ [g/mol] |
| 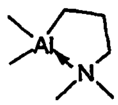 | 8 | 153 | 24 | 333 | 704.000 |
| Vergleich $AlEt_3$ | 62 | 152 | 12 | 217 | 388.000 |

Tabelle 2:

| Die Mikrostruktur der Polypropene, erhalten mit $MgCl_2$ / Aluminiumorganyl-Verbindungen und $TiCl_4$: | | | | | | | | | | | | |
|---|---|---|---|---|---|---|---|---|---|---|---|---|
| | | | **Pentade** | | | | | | | | | |
| | $n_{iso}$ | Rel. Int. [%] | mmmm | mmmr | mmr | mmrr | rmrr+ mrmm | mrmr | mr | mm | mrrm |
| 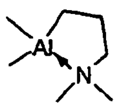 | 10 | Rel. Int. [%] | 57.9 | 9.1 | 1.4 | 0.0 | 9.7 | 6.0 | 2.7 | 8.0 | 5.3 |
| Vergleich $AlEt_3$ | 7 | Rel. Int. [%] | 46.5 | 10.9 | 2.9 | 0.0 | 12.8 | 8.7 | 2.9 | 8.7 | 6.5 |

Tabelle 3:

| Polymerisation von Propylen mit $MgCl_2/TiCl_4$ und Aluminiumorganyl-Verbindungen bei 30°C. Polymerisationsbedingungen: $T_p$ = 30 °C in Toluol, $P_{Monomer}$ = 2 bar, $c_{Ti}$ = $10^{-5}$ mol/l, Al/Ti = 5 | | | | | |
|---|---|---|---|---|---|
| Cokatalysator | Aktivität [$kg_{PP}$/ ($mol_{Ti}$ $c_{Propen}$ h)] | $T_m$ [°C] | Kristallinität [%] | $M_{\eta}$ [g/mol] | $M_w/M_n$ |
| 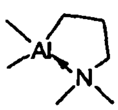 | 145 | 154 | 8 | 634.000 | 13.4 |
| 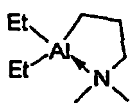 | 150 | 152 | 8 | 472.000 | 11.5 |
| Vergleich $AlEt_3$ | 155 | 151 | 10 | 312.000 | 28.4 |

Tabelle 4:

| Die Mikrostruktur der Polypropene, erhalten mit $MgCl_2$/ $TiCl_4$ und Aluminiumorganyl- Verbindungen: | | | | | | | | | | | |
|---|---|---|---|---|---|---|---|---|---|---|---|
| | | | **Pentade** | | | | | | | | |
| | $n_{iso}$ | Rel. Int. [%] | mmmm | mmmr | mmr | mmrr | rmrr+ mrmm | mrmr | rrrr | mrm | mrrm |
| 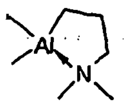 | 8 | Rel. Int. [%] | 54.3 | 11.7 | 4.7 | 11.3 | 6.4 | 2.9 | 2.5 | 3.8 | 2.4 |
| 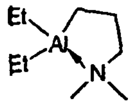 | 6 | Rel. Int. [%] | 45.4 | 9.1 | 2.4 | 11.3 | 7.2 | 2.2 | 11.2 | 2.0 | 9.3 |
| Vergleich $AlEt_3$ | 7 | Rel. Int. [%] | 51.0 | 8.1 | 2.0 | 10.3 | 6.9 | 1.7 | 11.5 | 5.0 | 3.4 |

Die Abb. 1 zeigt Polymerisationsergebnisse unter der folgenden Variation der Polymerisationstemperatur während der Polymerisation von Propylen mit $MgCl_2/TiCl_4$ und Aluminiumorganyl-Verbindungen bei 2 bar.

Polymerisationsbedingungen: Al/Ti = 5, $p_{Propen}$ = 2 bar, $c_{Ti} = 2.5 \cdot 10^{-4}$ mol/l in n-Hexan, $t_P$ = 60 min.

Abb. 2 zeigt Aktivitätsverläufe der Polymerisationen von Propen bei 45 ˚C.

Tabelle 5:

| Eigenschaften der erhaltenen Polypropene | | | | | | |
|---|---|---|---|---|---|---|
| Cokatalysator | $T_P$ [˚C] | $T_M$ [˚C] | Kristallinität[%] | mmmm [%] | $N_{iso}$ | $M_\eta$ [g/mol] |
| 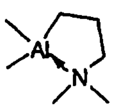 | 30<br>45<br>60 | 155<br>156<br>156 | 10<br>11<br>9 | 34.9<br>37.9<br>40.8 | 4<br>5<br>5 | 438000<br>475000<br>406000 |
| 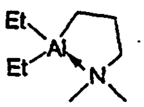 | 30<br>45<br>60 | 156<br>154<br>155 | 11<br>11<br>18 | 47.7<br>45.5<br>43.5 | 7<br>7<br>8 | 438000<br>521000<br>634000 |
| 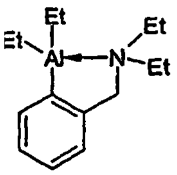 | 60 | 157 | 27 | 40.0 | 5 | 360000 |
| Vergleich $AlEt_3$ | 30<br>45<br>60 | 153<br>154<br>156 | 12<br>16<br>26 | 37.6<br>44.0<br>42.3 | 5<br>6<br>6 | 247000<br>215000<br>200000 |

Tabelle 6:

| Variation des Al/Ti-Verhältnisses bei der Polymerisation von Propylen mit $MgCl_2/TiCl_4$ und Aluminiumorganyl-Verbindungen bei 60˚C und 2 bar. | | | | | | |
|---|---|---|---|---|---|---|
| Polymerisationsbedingungen: $T_p$ = 60 ˚C in n-Hexan, $p_{Propen}$ = 2 bar, $c_{Ti}$ = $2.5\cdot10^{-4}$ mol/l, $t_P$ = 60 min. | | | | | | |
| Cokatalysator | Al:Ti | Aktivität [$kg_{PP}/mol_{Ti}\cdot h\cdot mol/l_{Propen}$] | mmmm [%] | $T_m$ [˚C] | Kristallinität [%] | $M_\eta$ [g/mol] |
| 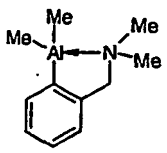 | 1.5 | 223 | - | - | - | - |
| | 2 | 348 | 31 | 154 | 7 | - |
| | 3 | 319 | 39 | 156 | 15 | 477000 |
| | 5 | 279 | 45 | 156 | 16 | 528000 |
| | 10 | 203 | 50 | 156 | 17 | 465000 |
| | 20 | 113 | 55 | 157 | 19 | 710000 |
| 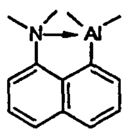 | 2 | 161 | 29 | 154 | 4 | - |
| | 3 | 297 | 37 | 154 | 8 | 340000 |
| | 5 | 405 | 41 | 155 | 12 | 414000 |
| | 10 | 339 | 45 | 156 | 14 | 428000 |
| 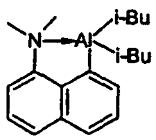 | 5 | 0 | - | - | - | - |
| | 10 | 5 | 30 | 152 | 5 | 264000 |
| | 20 | 55 | 26 | 152 | 2 | 287000 |
| 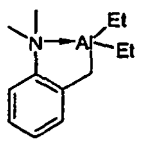 | 2 | 218 | 32 | 152 | 3 | - |
| | 3 | 275 | 40 | 153 | 7 | 336000 |
| | 5 | 320 | 45 | 154 | 12 | 419000 |
| | 10 | 311 | 48 | 154 | 17 | 385000 |
| | 20 | 295 | 53 | 154 | 15 | 432000 |
| 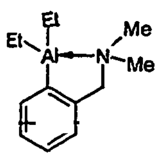 | 2 | 295 | 34 | 152 | 6 | - |
| | 3 | 347 | 45 | 153 | 6 | 306000 |
| | 5 | 312 | 47 | 155 | 10 | 523000 |
| | 10 | 234 | 50 | 156 | 12 | 389000 |
| | 20 | 120 | 54 | 157 | 16 | 559000 |
| 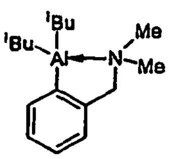 | 3 | 0 | - | - | - | - |
| | 5 | 63 | 23 | 151 | 1 | 233000 |
| | 10 | 71 | 21 | 151 | 1 | 249000 |
| | 20 | 75 | 22 | 152 | 3 | - |
| | 50 | 83 | 26 | 152 | 6 | 326000 |
| $AlEt_3$ | 2 | 20 | - | - | - | - |
| | 3 | 269 | 28 | 152 | 2 | 243000 |
| | 5 | 380 | 40 | 153 | 8 | 191000 |
| | 10 | 440 | 47 | 153 | 10 | 165000 |
| | 20 | 456 | 54 | 155 | 18 | 218000 |
| | 30 | 459 | - | - | - | - |
| | 50 | 343 | 62 | 157 | 21 | 214000 |

Abb. 3 zeigt die Variation des Al/Ti-Verhältnisses bei der Polymerisation von Propylen mit $MgCl_2/TiCl_4$ und Aluminiumorganyl-Verbindungen bei 60˚C und 6 bar.

Polymerisationsbedingungen: $T_p$ = 60 ˚C in n-Hexan, $p_{Propen}$ = 6 bar, $c_{Ti}$ = $5\cdot10^{-4}$ mol/l, $t_P$ = 60 min.

Tabelle 7:

| Schmelzpunkte und Kristallinitäten der erhaltenen Polypropene. | | | | |
|---|---|---|---|---|
| Al/Ti-Verhältnis | $T_m$ [°C] 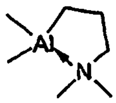 | $T_m$ [°C] $AlEt_3$ | Kristallinität [%] 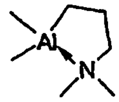 | Kristallinität [%] $AlEt_3$ |
| 1 | 153 | - | 10 | - |
| 3 | 154 | 147 | 14 | 7 |
| 5 | 156 | 153 | 25 | 18 |
| 10 | 156 | 153 | 22 | 20 |
| 25 | 156 | 151 | 17 | 6 |
| 50 | 157 | 153 | 30 | 21 |
| 100 | 156 | - | 38 | - |

**Patentansprüche**

**1.** Stickstoffhaltige Aluminiumorganyl-Komplexe der allgemeinen Formel (I)

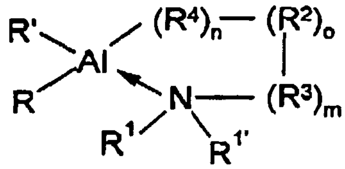

**(I)**

mit der Maßgabe, dass

$R^1$, $R^{1'}$ $CH_3$
mit
R, R' unabhängig voneinander verzweigtes oder unverzweigtes $C_3$-$C_7$-Alkyl

oder

$R^1$, $R^{1'}$ $C_2H_5$,

mit

R, R' unabhängig voneinander verzweigtes oder unverzweigtes $C_1$-$C_7$-Alkyl,

wenn

$R^2$

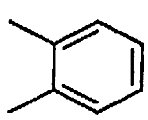

$R^3$ $CH_2$

m,o 1

und

n 0

bedeuten,
oder mit der Maßgabe, dass

R, R', $R^1$, $R^{1'}$ unabhängig voneinander verzweigtes oder unverzweigtes $C_1$-$C_7$-Alkyl,

wenn

$R^2$

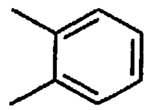

$R^4$ $CH_2$
n, o 1,

und

m 0

bedeuten,
oder mit der Maßgabe, dass

$R^1$, $R^{1'}$ $CH_3$
mit
R, R' unabhängig voneinander verzweigtes oder unverzweigtes $C_3$-$C_7$-Alkyl

oder

$R^1$, $R^{1'}$ $C_2H_5$

mit

R, R' unabhängig voneinander verzweigtes oder unverzweigtes $C_1$-$C_7$-Alkyl,

wenn

$R^2$

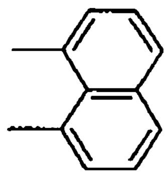

o 1,

und

m, n 0

bedeuten.

**2.** Stickstoffhaltige Aluminiumorganyl-Komplexe gemäß Anspruch 1 der allgemeinen Formel (I), worin

$R^1$, $R^{1'}$ $CH_3$

und

R, R' unabhängig voneinander i-$C_3H_7$, i-$C_4H_9$, oder ein verzweigtes oder unverzweigtes Alkyl aus der Gruppe $C_5H_{11}$, $C_6H_{13}$, und $C_7H_{15}$

bedeuten.

**3.** Stickstoffhaltige Aluminiumorganyl-Komplexe gemäß Anspruch 1 der allgemeinen Formel (I), worin

$R^1$, $R^{1'}$ $C_2H_5$

und

R, R' unabhängig voneinander $CH_3$, $C_2H_5$ oder i-$C_4H_9$ bedeuten.

**4.** Verwendung von stickstoffhaltigen Aluminiumorganyl-Komplexen der allgemeinen Formel (I) gemäß der Ansprüche 1 - 3 als Cokatalysatoren in Polymerisationsreaktionen von Olefinen.

**5.** Verwendung einer Verbindung der allgemeinen Formel (I) gemäß Anspruch 1 ausgewählt aus der Gruppe
[2-(Dimethylamino)phen-1-yl]dimethylaluminium,
[2-(Dimethylamino)phen-1-yl]diethylaluminium,
[2-(Dimethylamino)phen-1-yl]dipropylaluminium,
[2-(Dimethylamino)phen-1-yl]dibutylaluminum,
[2-(Diethylamino)phen-1-yl]dimethylatuminium,
[2-(Diethylamino)phen-1-yl]diethylaluminium,
[2-(Dimethylamino)benzyl]dimethylaluminium,
[2-(Dimethylamino)benzyl]dipropylaluminium,
[2-(Dimethytamino)benzyl]dibutylaluminium,
[2-(Diethylamino)benzyl]dimethylaluminium,
[2-(Diethylamino)benzyl]diethylaluminium,
[2-(Dimethylaminomethyl)phen-1-yl]diethylaluminium,
[2-(Dimethylaminomethyl)phen-1 -yl]dipropylaluminium,
[2-(Dimethylaminomethyl)phen-1-yl]dibutylaluminium,
[2-(Diethylaminomethyl)phen-1-yl]dimethylaluminium,
[2-(Diethylaminomethyl)phen-1-yl]diethylaluminium,
[2-(Diethylaminomethyl)phen-1-yl]dipropylaluminium,
[2-(Diethylaminomethyl)phen-1-yl]dibutylaluminium,
[8-(Dimethylamino)naphth-1-yl]dipropylaluminium,
[8-(Dimethylamino)naphth-1-yl]dibutylaluminium
als Koordinationskatalysatoren in Polymerisationsreaktionen von Propen.

**6.** Verwendung von stickstoffhaltigen Aluminiumorganyl-Komplexen der allgemeinen Formel (I) gemäß der Ansprüche 1 - 3 als Koordinationskatalysatoren in heterogenen Polymerisationsreaktionen von Propen.

**7.** Verwendung einer Verbindungen der allgemeinen Formel (I) gemäß der Ansprüche 1 - 3 oder einer Verbindung ausgewählt aus der Gruppe der in Anspruch 5 genannten Verbindungen als Koordinationskatalysatoren in heterogenen Polymerisationsreaktionen von Propen.

**8.** Verwendung einer Verbindungen der allgemeinen Formel (I) gemäß der Ansprüche 1 - 3 oder einer Verbindung, ausgewählt aus der Gruppe der in Anspruch 5 genannten Verbindungen, als Stereoselektivitätsvermittler in der Polymerisation von Propen.

**9.** Koordinationskatalysatorsystem, enthaltend eine Verbindung der allgemeinen Formel (I) gemäß der Ansprüche 1-3 oder eine Verbindung, ausgewählt aus der Gruppe der in Anspruch 5 genannten Verbindungen, in Kombination mit Übergangsmetallverbindungen der IV. bis VIII. Nebengruppen des Periodensystems der Elemente.

**10.** Koordinationskatalysatorsystem enthaltend stickstoffhaltige Aluminiumorganyl-Komplexe der allgemeinen Formel (I) gemäß der Ansprüche 1 - 3 oder eine Verbindung, ausgewählt aus der Gruppe der in Anspruch 5 genannten Verbindungen, in Kombination mit Verbindungen ausgewählt aus der Gruppe der Halogenide des Titans und des Vanadiums.

**11.** Koordinationskatalysatorsystem gemäß der Ansprüche 9-10 enthaltend stickstoffhaltige Aluminiumorganyl-Komplexe der allgemeinen Formel (I) gemäß der Ansprüche 1-3 oder eine Verbindung, ausgewählt aus der Gruppe der in Anspruch 5 genannten Verbindungen, **dadurch gekennzeichnet, dass** es auf einem anorganischen Träger, ausgewählt aus der Gruppe $MgCl_2$ und $SiO_2$ oder deren Gemische, gebunden ist.

**12.** Katalysatorsystem gemäß der Ansprüche 9 - 10, **dadurch gekennzeichnet, dass** es interne Donoren ausgewählt aus der Gruppe der Ether und der Ester, insbesondere Benzoesäureethylester und Phthalsäuredimethylester und gegebenenfalls externe Donoren ausgewählt der Gruppe der $RSi(OR)_3$-Verbindungen, insbesondere $PhSi(OEt)_3$ enthält.

**13.** Verfahren zur Herstellung von Polypropylen, **dadurch gekennzeichnet, dass** stickstoffhaltige Aluminiumorganyl-Komplexe der allgemeinen Formel (I) gemäß der Ansprüche 1-3 oder Verbindungen, ausgewählt aus der Gruppe der in Anspruch 5 genannten Verbindungen, als Katalysatorkomponenten verwendet werden.

**14.** Verfahren zur Herstellung von stickstoffhaltigen Aluminiumorganylkomplexen der allgemeinen Formel (1),gemäß Anspruch 1
worin

R, R' unabhängig voneinander $CH_3$, $C_2H_5$, i-$C_4H_5$
$R^1$, $R^{1'}$ unabhängig voneinander $CH_3$, $C_2H_5$
$R^2$ ein unsubstituierter Kohlenwasserstoff, ausgewählt aus der Gruppe

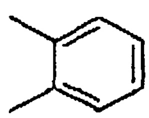 und 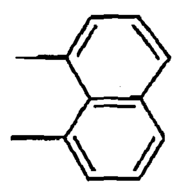 ,

$R^3$, $R^4$ $CH_2$
und unabhängig voneinander m und n = 0 oder 1 und o = 1 bedeuten,
**dadurch gekennzeichnet, dass** eine Verbindung der allgemeinen Formel (II)

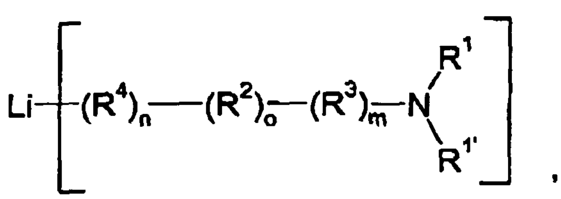 , (II)

worin $R^1$, $R^{1'}$, $R^2$, $R^3$ und $R^4$ die in den Ansprüchen 1 bis 3 gegebenen Bedeutungen haben,
mit einer Verbindung der allgemeinen Formel (III)

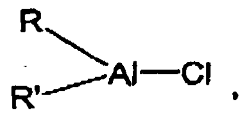

(III)

worin R und R' die in den Ansprüchen 1 bis 3 gegebenen Bedeutungen haben, in einem aprotischen Lösungsmittel bei einer Temperatur im Bereich von -50 bis +30 ˚C umgesetzt wird und das entstandene Reaktionsprodukt abgetrennt wird.

**15.** Verfahren gemäß Anspruch 14, **dadurch gekennzeichnet, dass** ein aprotisches Lösungsmittel ausgewählt aus der Gruppe Toluol, Xylol, Pentan, Cyclopentan, Hexan, Cyclohexan, und Heptan oder deren Gemische verwendet wird.

**16.** Verfahren gemäß Anspruch 14, **dadurch gekennzeichnet, dass** das entstandene Reaktionsprodukt destillativ abgetrennt wird.

**17.** Verfahren zur Herstellung eines Katalysatorsystem zur Polymerisation von Propen, **dadurch gekennzeichnet, dass**

(a) ein Titan- oder Vanadiumhalogenid auf $MgCl_2$ oder $SiO_2$ oder auf einer Kombination aus $SiO_2$ und $MgCl_2$, gegebenenfalls unter Zugabe eines internen Donors, und einer Aluminiumorgnyl-Verbindung der allgemeinen Formel (I) gemäß der Ansprüche 1-3 oder einer Verbindung, ausgewählt aus der Gruppe der in Anspruch 5 genannten Verbindungen, geträgert wird
oder
(b) eine Trägerung einer Aluminiumorganyl-Verbindung der allgemeinen Formel (I) gemäß der Ansprüche 1 - 3 oder einer Verbindung, ausgewählt aus der Gruppe der in Anspruch 5 genannten Verbindungen, auf $MgCl_2$ $SiO_2$ oder $SiO_2$ in Kombination mit $MgCl_2$ und Zugabe eines Titan- oder Vanadiumhalogenides und Zugabe eines internen Donors und/oder externen Donors erfolgt,
oder
(c) aus einer Aluminiumorganyl-Verbindung der allgemeinen Formel (I) gemäss der Ansprüche 1 - 3 oder einer Verbindung, ausgewählt aus der Gruppe der in Anspruch 5 genannten Verbindungen, und einem Titan- oder Vanadiumhalogenid eine aktive Spezies generiert wird, die auf $MgCl_2$ oder $SiO_2$ oder auf einer Kombination aus $SiO_2$ und $MgCl_2$ unter Zugabe eines oder mehrerer interner Donoren und gegebenefalls eines oder mehrerer externen Donoren geträgert wird.

**18.** Verfahren gemäß Anspruch 17, **dadurch gekennzeichnet, dass** zur Trägerung aprotische, unpolare Solventien als Lösemittel verwendet werden.

**19.** Verfahren gemäß Anspruch 18, **dadurch gekennzeichnet, dass** zur Trägerung aprotische, unpolare Solventien als Lösemittel ausgewählt aus der Gruppe Pentan, Hexan, Heptan, Octan, Benzol und Toluol verwendet werden.

**20.** Verfahren gemäß Anspruch 19, **dadurch gekennzeichnet, dass** als interne Donoren ausgewählt aus der Gruppe Benzoesäureethylester, Phthalsäuredimethylester und externe Donoren ausgewählt der Gruppe der Verbindungen der allgemeinen Formel $RSi(OR)_3$ verwendet werden.

**21.** Verfahren gemäß Anspruch 17, **dadurch gekennzeichnet, dass** als externer Donor $PhSi(OEt)_3$ verwendet wird.

## Claims

**1.** Nitrogen-containing organoaluminium complexes of the general formula (I)

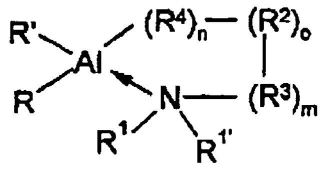

(I)

with the proviso that

$R^1$, $R^{1'}$ denote $CH_3$

where

R, R', independently of one another, denote branched or unbranched $C_3$-$C_7$-alkyl

or

$R^1$ $R^{1'}$ denote $C_2H_5$

where

R, R', independently of one another, denote branched or unbranched $C_1$-$C_7$-alkyl

if

$R^2$ denotes

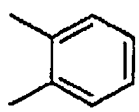

$R^3$ denotes $CH_2$
m, o denote 1

and

n denotes 0,

or with the proviso that

R, R', $R^1$, $R^{1'}$, independently of one another, denote branched or unbranched $C_1$-$C_7$-alkyl

if

$R^2$ denotes

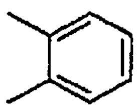

$R^1$ denotes $CH_2$
n, o denote 1

and

m denotes 0,

or with the proviso that

$R^1$, $R^{1'}$ denote $CH_3$

where

R, R', independently of one another, denote branched or unbranched $C_3$-$C_7$-alkyl

or

$R^1$, $R^{1'}$ denote $C_2H_5$

where

R, R', independently of one another, denote branched or unbranched $C_1$-$C_7$-alkyl

if

$R^2$ denotes

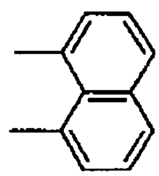

o denotes 1

and

m, n denote 0.

2. Nitrogen-containing organoaluminium complexes according to Claim 1 of the general formula (I) in which

$R^1$, $R^{1'}$ denote $CH_3$

and

R, R', independently of one another, denote i-$C_3H_7$, i-$C_4H_9$, or a branched or unbranched alkyl from the group $C_5H_{11}$, $C_6H_{13}$ and $C_7H_{15}$.

3. Nitrogen-containing organoaluminium complexes according to Claim 1 of the general formula (I) in which

$R^1$, $R^{1'}$ denote $C_2H_5$

and

R, R', independently of one another, denote $CH_3$, $C_2H_5$ or i-$C_4H_9$.

4. Use of nitrogen-containing organoaluminium complexes of the general formula (I) according to Claims 1 - 3 as

cocatalysts in olefin polymerisation reactions.

**5.** Use of a compound of the general formula (I) according to Claim 1, selected from the group
[2-(dimethylamino)phen-1-yl]dimethylaluminium,
[2-(dimethylamino)phen-1-yl]diethylaluminium,
[2-(dimethylamino)phen-1-yl]dipropylaluminium,
[2-(dimethylamino)phen-1-yl]dibutylaluminium,
[2-(diethylamino)phen-1-yl]dimethylaluminium,
[2-(diethylamino)phen-1-yl]diethylaluminium,
[2-(dimethylamino)benzyl]dimethylaluminium,
[2-(dimethylamino)benzyl]dipropylaluminium,
[2-(dimethylamino)benzyl]dibutylaluminium,
[2-(diethylamino)benzyl]dimethylaluminium,
[2-(diethylamino)benzyl]diethylaluminium,
[2-(dimethylaminomethyl)phen-1-yl]diethylaluminium,
[2-(dimethylaminomethyl)phen-1-yl]dipropylaluminium,
[2-(dimethylaminomethyl)phen-1-yl]dibutylaluminium,
[2-(diethylaminomethyl)phen-1-yl]dimethylaluminium,
[2-(diethylaminomethyl)phen-1-yl]diethylaluminium,
[2-(diethylaminomethyl)phen-1-yl]dipropylaluminium,
[2-(diethylaminomethyl)phen-1-yl]dibutylaluminium,
[8-(dimethylamino)naphth-1-yl]dipropylaluminium,
[8-(dimethylamino)naphth-1-yl]dibutylaluminium,
as coordination catalysts in propene polymerisation reactions.

**6.** Use of nitrogen-containg organoaluminium complexes of the general formula (I) according to Claims 1 - 3 as coordination catalysts in heterogeneous propene polymerisation reactions.

**7.** Use of a compound of the general formula (I) according to Claims 1 - 3 or a compound selected from the group of compounds mentioned in Claim 5 as coordination catalysts in heterogeneous propene polymerisation reactions.

**8.** Use of a compound of the general formula (I) according to Claims 1 - 3 or a compound selected from the group of compounds mentioned in Claim 5 as stereoselectivity promoter in the polymerisation of propene.

**9.** Coordination catalyst system comprising a compound of the general formula (I) according to Claims 1 - 3 or a compound selected from the group of compounds mentioned in Claim 5, in combination with transition-metal compounds from sub-groups IV to VIII of the Periodic Table of the Elements.

**10.** Coordination catalyst system comprising nitrogen-containing organoaluminium complexes of the general formula (I) according to Claims 1 - 3 or a compound selected from the group of compounds mentioned in Claim 5, in combination with compounds selected from the group of the halides of titanium and vanadium.

**11.** Coordination catalyst system according to Claims 9-10 comprising nitrogen-containing organoaluminium complexes of the general formula (I) according to Claims 1 - 3 or a compound selected from the group of compounds mentioned in Claim 5, **characterised in that** it is bonded to an inorganic support selected from the group $MgCl_2$ and $SiO_2$ or mixtures thereof.

**12.** Catalyst system according to Claims 9 - 10, **characterised in that** it comprises internal donors selected from the group of the ethers and esters, in particular ethyl benzoate and dimethyl phthalate, and optionally external donors selected from the group of the $RSi(OR)_3$ compounds, in particular $PhSi(OEt)_3$.

**13.** Process for the preparation of polypropylene, **characterised in that** nitrogen-containing organoaluminium complexes of the general formula (I) according to Claims 1 - 3 or compounds selected from the group of compounds mentioned in Claim 5 are used as catalyst components.

**14.** Process for the preparation of nitrogen-containing organoaluminium complexes of the general formula (I) according to Claim 1
in which

R, R', independently of one another, denote $CH_3$, $C_2H_5$, $i\text{-}C_4H_5$
$R^1$, $R^{1'}$, independently of one another, denote $CH_3$, $C_2H_5$
$R^2$ denotes an unsubstituted hydrocarbon selected from the group

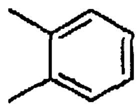

and

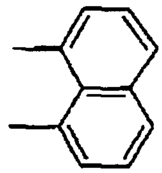

,

$R^3$, $R^4$ denote $CH_2$

and, independently of one another, m and n = 0 or 1 and o = 1, **characterised in that** a compound of the general formula (II)

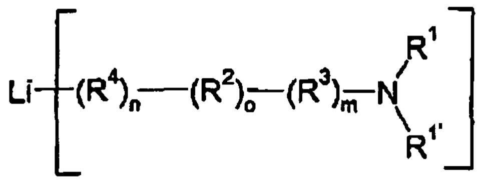

, (II)

in which $R^1$, $R^{1'}$, $R^2$, $R^3$ and $R^4$ have the meanings given in Claims 1 to 3,
is reacted with a compound of the general formula (III)

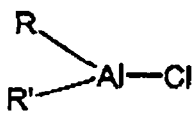

, (III)

in which R and R' have the meanings given in Claims 1 to 3,
in an aprotic solvent at a temperature in the range from -50 to +30°C, and the resultant reaction product is separated off.

**15.** Process according to Claim 14, **characterised in that** an aprotic solvent selected from the group toluene, xylene, pentane, cyclopentane, hexane, cyclohexane and heptane or mixtures thereof is used.

**16.** Process according to Claim 14, **characterised in that** the resultant reaction product is separated off by distillation.

**17.** Process for the preparation of a catalyst system for the polymerisation of propene, **characterised in that**

(a) a titanium or vanadium halide is supported on $MgCl_2$ or $SiO_2$ or on a combination of $SiO_2$ and $MgCl_2$, optionally with addition of an internal donor and an organoaluminium compound of the general formula (I) according to Claims 1 - 3 or a compound selected from the group of compounds mentioned in Claim 5
or
(b) an organoaluminium compound of the general formula (I) according to Claims 1 - 3 or a compound selected from the group of compounds mentioned in Claim 5 is supported on $MgCl_2$, $SiO_2$ or $SiO_2$ in combination with $MgCl_2$, and a titanium or vanadium halide is added, and an internal donor and/or external donor is added,
or
(c) an active species is generated from an organoaluminium compound of the general formula (I) according to Claims 1 - 3 or a compound selected from the group of compounds mentioned in Claim 5 and a titanium or vanadium halide and is supported on $MgCl_2$ or $SiO_2$ or on a combination of $SiO_2$ and $MgCl_2$ with addition of one or more internal donors and optionally one or more external donors.

**18.** Process according to Claim 17, **characterised in that** aprotic, nonpolar solvents are used as solvent for the supporting.

**19.** Process according to Claim 18, **characterised in that** aprotic, nonpolar solvents selected from the group pentane, hexane, heptane, octane, benzene and toluene are used as solvents for the supporting.

**20.** Process according to Claim 19, **characterised in that** the internal donors used are selected from the group ethyl benzoate, dimethyl phthalate and the external donors used are selected from the group of the compounds of the general formula $RSi(OR)_3$.

**21.** Process according to Claim 17, **characterised in that** the external donor used is $PhSi(OEt)_3$.

**Revendications**

**1.** Complexes d'organoaluminium contenant de l'azote de la formule générale (I)

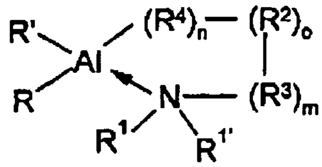

(I)

étant entendu que :

$R^1$, $R^{1'}$ représentent $CH_3$

où

R, R' indépendamment l'un de l'autre, représentent $C_3$-$C_7$-alkyle ramifié ou non ramifié

ou

$R^1$, $R^{1'}$ représentent $C_2H_5$

où

R, R' indépendamment l'un de l'autre, représentent $C_1$-$C_7$-alkyle ramifié ou non ramifié

si

$R^2$ représente

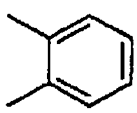

$R^3$ représente $CH_2$
m, o représentent 1

et

n représente 0,

ou étant entendu que

R, R', $R^1$, $R^{1'}$, indépendamment les uns des autres, représentent $C_1$-$C_7$-alkyle ramifié ou non ramifié.

si

$R^2$ représente

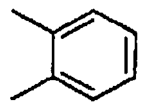

$R^4$ représente $CH_2$
n, o représentent 1

et

m représente 0,

ou étant entendu que

$R^1$, $R^{1'}$ représentent $CH_3$

où

R, R', indépendamment l'un de l'autre, représentent $C_3$-$C_7$-alkyle ramifié ou non ramifié

ou

$R^1$, $R^{1'}$ représentent $C_2H_5$

où

R, R', indépendamment l'un de l'autre, représentent $C_1$-$C_7$-alkyle ramifié ou non ramifié

si

$R^2$ représente

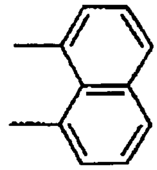

o représente 1

et

m, n représentent 0.

**2.** Complexes d'organoaluminium contenant de l'azote selon la revendication 1 de la formule générale (I) dans laquelle

$R^1$, $R^{1'}$ représentent $CH_3$

et

R, R' indépendamment l'un de l'autre, représentent i-$C_3H_7$, i-$C_4H_9$, ou un alkyle ramifié ou non ramifié pris parmi le groupe $C_5H_{11}$, $C_6H_{13}$ et $C_7H_{15}$.

**3.** Complexes d'organoaluminium contenant de l'azote selon la revendication 1 de la formule générale (I) dans laquelle

$R^1$, $R^{1'}$ représentent $C_2H_5$

et

R, R', indépendamment l'un de l'autre, représentent $CH_3$, $C_2H_5$ ou i-$C_4H_9$.

**4.** Utilisation de complexes d'organoaluminium contenant de l'azote de la formule générale (I) selon les revendications 1 - 3 en tant que co-catalyseurs au niveau de réactions de polymérisation d'oléfine.

**5.** Utilisation d'un composé de la formule générale (I) selon la revendication 1, choisi parmi le groupe
[2-(diméthylamino)phén-1-yl]diméthylaluminium,
[2-(diméthylamino)phén-1-yl]diéthylaluminium,
[2-(diméthylamino)phén-1-yl]dipropylaluminium,
[2-(diméthylamino)phén-1-yl]dibutylaluminium,
[2-(diéthylamino)phén-1-yl]diméthylaluminium,
[2-(diéthylamino)phén-1-yl]diéthylaluminium,
[2-(diméthylamino)benzyl]diméthylaluminium,
[2-(diméthylamino)benzyl]dipropylaluminium,
[2-(diméthylamino)benzyl]dibutylaluminium,
[2-(diéthylamino)benzyl]diméthylaluminium,
[2-(diéthylamino)benzyl]diéthylaluminium,
[2-(diméthylaminométhyl)phén-1-yl]diéthylaluminium,
[2-(diméthylaminométhyl)phén-1-yl]dipropylaluminium,
[2-(diméthylaminométhyl)phén-1-yl]dibutylaluminium,
[2-(diéthylaminométhyl)phén-1-yl]diméthylaluminium,
[2-(diéthylaminométhyl)phén-1-yl]diéthylaluminium,
[2-(diéthylaminométhyl)phén-1-yl]dipropylaluminium,
[2-(diéthylaminométhyl)phén-1-yl]dibutylaluminium,
[8-(diméthylamino)naphth-1-yl]dipropylaluminium,
[8-(diméthylamino)naphth-1-yl]dibutylaluminium,
en tant que catalyseurs de coordination au niveau de réactions de polymérisation de propène.

**6.** Utilisation de complexes d'organoaluminium contenant de l'azote de la formule générale (I) selon les revendications 1 - 3 en tant que catalyseurs de coordination au niveau de réactions de polymérisation de propène hétérogène.

**7.** Utilisation d'un composé de la formule générale (I) selon les revendications 1 - 3 ou d'un composé choisi parmi le groupe de composés mentionné selon la revendication 5 en tant que catalyseurs de coordination au niveau de réactions de polymérisation de propène hétérogène.

**8.** Utilisation d'un composé de la formule générale (I) selon les revendications 1 - 3 ou d'un composé choisi parmi le groupe de composés mentionné selon la revendication 5 en tant que promoteur de stéréo-sélectivité au niveau de la polymérisation du propène.

**9.** Système de catalyseurs de coordination comprenant un composé de la formule générale (I) selon les revendications 1 - 3 ou un composé choisi parmi le groupe de composés mentionné selon la revendication 5, en combinaison avec des composés de métaux de transition pris parmi les sous-groupes IV à VIII du tableau périodique des éléments.

**10.** Système de catalyseurs de coordination comprenant des complexes d'organoaluminium contenant de l'azote de

la formule générale (I) selon les revendications 1 - 3 ou un composé choisi parmi le groupe de composés mentionné selon la revendication 5, en combinaison avec des composés choisis parmi le groupe des halogénures de titane et de vanadium.

**11.** Système de catalyseurs de coordination selon les revendications 9 - 10 comprenant des complexes d'organoaluminium contenant de l'azote de la formule générale (1) selon les revendications 1 - 3 ou un composé choisi parmi le groupe de composés mentionné selon la revendication 5, **caractérisé en ce qu'**il est lié à un support inorganique choisi parmi le groupe $MgCl_2$ et $SiO_2$ ou des mélanges afférents.

**12.** Système de catalyseurs selon les revendications 9 - 10, **caractérisé en ce qu'**il comprend des donneurs internes choisis parmi le groupe des éthers et des esters, en particulier benzoate d'éthyle et phthalate de diméthyle et en option, des donneurs externes choisis parmi le groupe des composés $RSi(OR)_3$, en particulier $PhSi(OEt)_3$.

**13.** Procédé pour la préparation de polypropylène, **caractérisé en ce que** des complexes d'organoaluminium contenant de l'azote de la formule générale (I) selon les revendications 1 - 3 ou des composés choisis parmi le groupe de composés mentionné selon la revendication 5 sont utilisés en tant que composants de catalyseur.

**14.** Procédé pour la préparation de complexes d'organoaluminium contenant de l'azote de la formule générale (I) selon la revendication 1
dans laquelle

R, R', indépendamment l'un de l'autre, représentent $CH_3$, $C_2H_5$, i-$C_4H_5$,
$R^1$, $R^{1'}$, indépendamment l'un de l'autre, représentent $CH_3$, $C_2H_5$,
$R^2$ représente un hydrocarbure non substitué choisi parmi le groupe

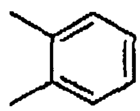 and 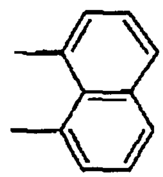 ,

$R^3$, $R^4$ représentent $CH_2$

et, de manière indépendante les uns des autres, m et n = 0 ou 1 et o = 1,
**caractérisé en ce qu'**un composé de la formule générale (II)

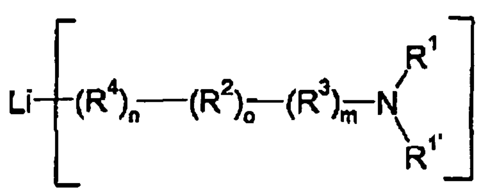 , (II)

dans laquelle $R^1$, $R^{1'}$, $R^2$, $R^3$ et $R^4$ présentent les significations présentées selon les revendications 1 à 3, est amené à réagir avec un composé de la formule générale (III)

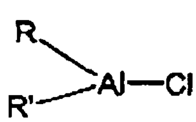 , (III)

dans laquelle R et R' présentent les significations données selon les revendications 1 à 3, dans un solvant aprotique à une température dans la plage de -50 à +30˚C,et le produit de réaction résultant est séparé.

**15.** Procédé selon la revendication 14, **caractérisé en ce qu'**un solvant aprotique choisi parmi le groupe comprenant toluène, xylène, pentane, cyclopentane, hexane, cyclohexane et heptane ou des mélanges afférents est utilisé.

**16.** Procédé selon la revendication 14, **caractérisé en ce que** le produit de réaction résultant est séparé par distillation.

**17.** Procédé pour la préparation d'un système de catalyseurs pour la polymérisation du propène, **caractérisé en ce que** :

(a) un halogénure de titane ou de vanadium est supporté sur $MgCl_2$ ou $SiO_2$ ou sur une combinaison $SiO_2$ et $MgCl_2$, en option moyennant l'ajout d'un donneur interne et d'un composé d'organoaluminium de la formule générale (I) selon les revendications 1 - 3 ou d'un composé choisi parmi le groupe de composés mentionné selon la revendication 5
ou
(b) un composé d'organoaluminium de la formule générale (I) selon les revendications 1 - 3 ou un composé choisi parmi le groupe de composés mentionné selon la revendication 5 est supporté sur $MgCl_2$, $SiO_2$ ou $SiO_2$ en combinaison avec $MgCl_2$, et un halogénure de titane ou de vanadium est ajouté, et un donneur interne et/ou un donneur externe est ajouté,
ou
(c) une espèce active est générée à partir d'un composé d'organoaluminium de la formule générale (I) selon les revendications 1 - 3 ou d'un composé choisi parmi le groupe de composés mentionné selon la revendication 5 et un halogénure de titane ou de vanadium est supporté sur $MgCl_2$ ou $SiO_2$ ou sur une combinaison de $SiO_2$ et de $MgCl_2$, moyennant l'ajout d'un ou de plusieurs donneurs internes et en option, d'un ou de plusieurs donneurs externes.

**18.** Procédé selon la revendication 17, **caractérisé en ce que** des solvants aprotiques non polaires sont utilisés en tant que solvant pour le support.

**19.** Procédé selon la revendication 18, **caractérisé en ce que** des solvants aprotiques non polaires choisis parmi le groupe constitué par pentane, hexane, heptane, octane, benzène et toluène sont utilisés en tant que solvants pour le support.

**20.** Procédé selon la revendication 19, **caractérisé en ce que** les donneurs internes utilisés sont choisis parmi le groupe constitué par benzoate d'éthyle, phthalate de diméthyle et les donneurs externes utilisés sont choisis parmi le groupe des composés de la formule générale $RSi(OR)_3$.

**21.** Procédé selon la revendication 17, **caractérisé en ce que** le donneur externe utilisé est $PhSi(OEt)_3$.

Abb. 1

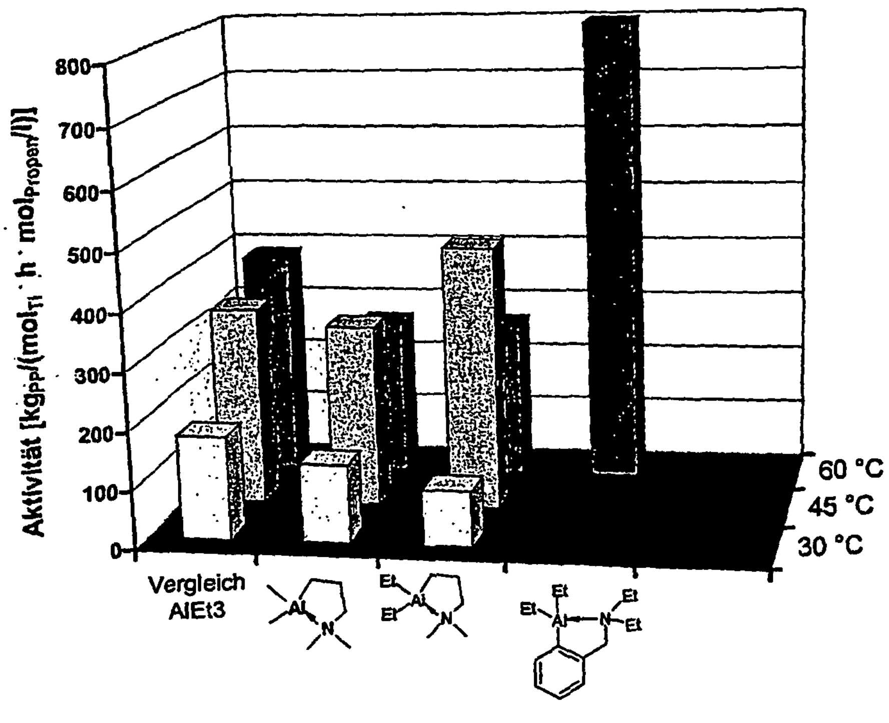
800
700
600
500
400
300
200
100
0
Aktivität [kg<sub>PP</sub>/(mol<sub>Ti</sub> · h · mol<sub>Propen</sub>/l)]
60 °C
45 °C
30 °C
Vergleich
AlEt3

**Abb. 2**

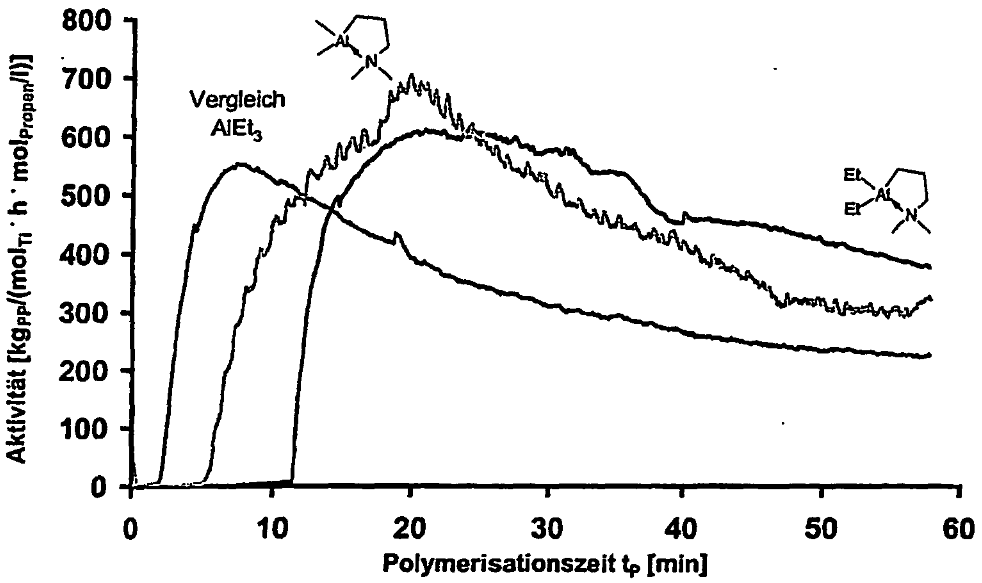
800
700
600
500
400
300
200
100
0
Aktivität [$kg_{PP}$/($mol_{Ti}$ · h · $mol_{Propen}$/l)]
Vergleich
$AlEt_3$
0
10
20
30
40
50
60
Polymerisationszeit $t_P$ [min]

Abb. 3

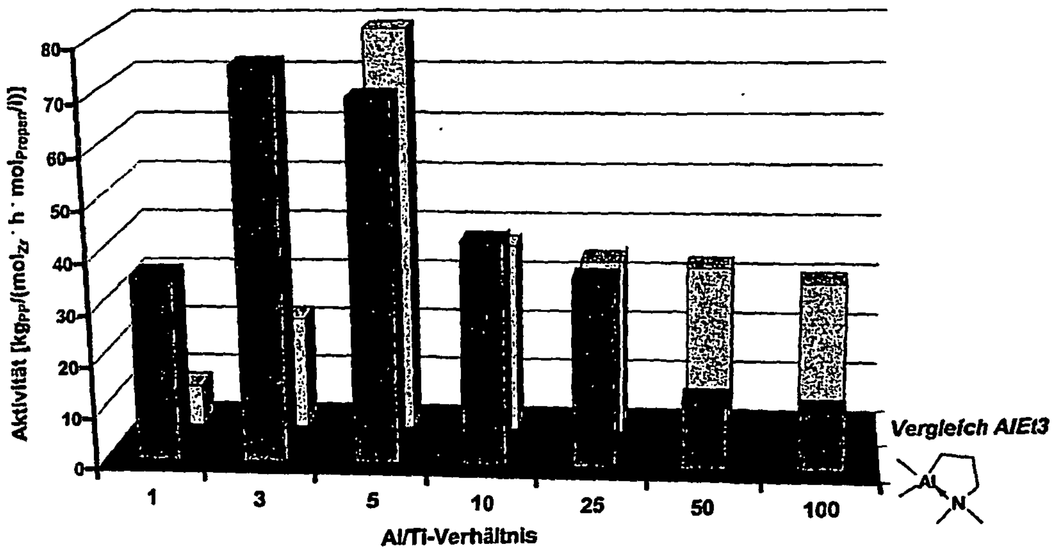
Aktivität [kgPP/(molZr · h · molPropen/l)]
0
10
20
30
40
50
60
70
80
1
3
5
10
25
50
100
Al/Ti-Verhältnis
Vergleich AlEt3